(19) Europäisches Patentamt

European Patent Office

Office européen des brevets

(11) **EP 3 306 534 B1**

(12) **EUROPEAN PATENT SPECIFICATION**

(45) Date of publication and mention
of the grant of the patent:
**21.07.2021 Bulletin 2021/29**

(21) Application number: **15894280.5**

(22) Date of filing: **31.08.2015**

(51) Int Cl.:
***G06N 3/04*** *(2006.01)*      ***G06N 3/08*** *(2006.01)*

(86) International application number:
**PCT/JP2015/074720**

(87) International publication number:
**WO 2016/194248 (08.12.2016 Gazette 2016/49)**

(54) **INFERENCE DEVICE AND INFERENCE METHOD**

INFERENZVORRICHTUNG UND INFERENZVERFAHREN

DISPOSITIF ET PROCÉDÉ D'INFÉRENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.06.2015 JP 2015113440**

(43) Date of publication of application:
**11.04.2018 Bulletin 2018/15**

(73) Proprietor: **Mitsubishi Electric Corporation
Chiyoda-ku
Tokyo 100-8310 (JP)**

(72) Inventors:
• **MATSUMOTO, Wataru**
  **Tokyo 100-8310 (JP)**
• **YOSHIMURA, Genta**
  **Tokyo 100-8310 (JP)**
• **ZHAO, Xiongxin**
  **Tokyo 100-8310 (JP)**

(74) Representative: **Pfenning, Meinig & Partner mbB
Patent- und Rechtsanwälte
Theresienhöhe 11a
80339 München (DE)**

(56) References cited:
**EP-A2- 0 528 399      JP-A- H0 355 658
JP-A- H02 236 659      JP-A- H04 355 889
JP-A- 2002 251 601      US-A- 6 119 112**

• **None**

EP 3 306 534 B1

**Description**

TECHNICAL FIELD

The present invention relates to an inference device and an inference method using a neural network.

BACKGROUND ART

As one of machine learning methods, neural networks have high capabilities in solving problems and are used in many types of processes, such as image recognition, sound recognition, abnormality detection, and future prediction.

A hierarchical neural network is known as one of neural network structures. Learning methods thereof mainly include two types, which are supervised learning and unsupervised learning.

The supervised learning is a method of tuning a connection state of a neural network such that actual output and target output match with each other after input data of a plurality of training examples and the target output are given. On the other hand, the unsupervised learning is a method of tuning a connection state of a neural network so as to extract an essential feature possessed in training examples without providing target output.

An error backpropagation method (a backpropagation algorithm) belonging to supervised learning methods may cause a problem that learning results do not converge when the number of layers in a neural network increases.

In order to solve the above problem, there is a method of performing pre-training on each layer by means of unsupervised learning, such as that in an auto-encoder or a restrict Boltzmann machine, to determine a default value of a connection state of a neural network. After that, the connection state of the neural network is fine-tuned by using an error backpropagation method.

This method is capable of tuning of the connection state of the neural network such that actual output and target output match with each other without causing the problem that learning results do not converge.

A hierarchical neural network can be represented by a graph structure which is constituted of a plurality of nodes (or joint points) and edges (or branches) connecting among the nodes. In a neural network having four layers, for example, a plurality of nodes are layered into an input layer, a first intermediate layer, a second intermediate layer, and an output layer. In this case, no edges exist among nodes belonging to the same layer, while edges exist only between every pair of adjacent layers. Note that the intermediate layers may be called as "hidden layers".

Each of the edges has a parameter indicating a degree of connection between two connected nodes. This parameter is called as "edge weight".

When learning or inference is performed by using the hierarchical neural network, the calculation amount and the memory amount are proportional to the number of edges. In general, nodes belonging to each of the layers are connected by edges with all nodes belonging to a layer adjacent thereto. Thus, the calculation amount and the memory amount are directly related to the number of nodes.

For example, assuming that the number of nodes in the input layer is N, the number of nodes in the first intermediate layer is Mi, the number of nodes in the second intermediate layer is $M_2$, and the number of nodes in the output layer is 1, the number of edges between the input layer and the first intermediate layer is $N \times Mi$, the number of edges between the first intermediate layer and the second intermediate layer is $M_1 \times M_2$, and the number of edges between the second intermediate layer and the output layer is $M_2$. Therefore, the calculation amount and the memory amount upon learning or performing inference are proportional to $(N \times M_1 + M_1 \times M_2 + M_2)$.

Especially, when the number of nodes in the intermediate layers is proportional to the number of nodes in the input layer, the number of nodes in the input layer is N, the number of nodes in the first intermediate layer is $M_1 = a \times N$, and the number of nodes in the second intermediate layer is $M_2 = b \times N$. In this case, the total number of edges in the neural network is $N \times a \times N + a \times N \times b \times N + b \times N = (a + a \times b) \times N^2 + b \times N$. Therefore, the calculation amount and the memory amount upon learning or performing inference are proportional to $(a + a \times b) \times N^2 + b \times N$.

Hierarchical neural networks often have the configuration as described above and thus the calculation amount and the memory amount increase in proportion to the square of N which is the amount of input data, that is, the square of N which is the number of nodes in the input layer. Therefore, the calculation amount and the memory amount drastically increase as the amount of input data increases, thus resulting in problems such as shortage in computer resources, delay of a process, or increase in cost of a device.

In the following Patent Literature 1, the number of edges between an input layer and an intermediate layer or the number of edges between the intermediate layer and an output layer are reduced by grouping a plurality of sets of input data based on correlation among the plurality of sets of data.

EP 0 528 399 A1 describes an apparatus for carrying out learning operation of a neural network which has an input layer, an intermediate layer, and an output layer. Plural nodes of the input layer are related to plural nodes of the intermediate layer with plural connection weights, while the plural nodes of the intermediate layer are also related to plural nodes of the output layer with plural connection weights. Therein, during error calculation between output data from the neural network and the teaching data, the apparatus judges whether each of the components of the teaching data is effective or ineffective, and output errors corresponding to the ineffective components are regarded as zero. The connection weights are thereafter corrected based upon the calculated errors. The activity levels of the subsequent layers are calculated by summing over the activities of all of the nodes of the preceding layer.

CITATION LIST

Patent Literature 1: JP Publication No. 2011-54200 A (FIG. 1)

SUMMARY OF INVENTION

Since inference devices in the conventional art are configured in the above manner, the number of edges between an input layer and an intermediate layer or the number of edges between the intermediate layer and an output layer can be reduced. However, between the input layer and the intermediate layer belonging to the same group, each node in the input layer is connected with all nodes in the intermediate layer and thus the reduction number of edges is limited. Therefore, there may cause a problem that the calculation amount and the memory amount upon inference are still large.

The present invention has been devised to solve the aforementioned problem with an object to obtain an inference method and an inference device that is capable of reducing the calculation amount and the memory amount upon performing inference. A further object is to obtain an inference device and an inference method having high inference accuracy.

An inference device according to the invention includes the features of the independent device claims. A method for image classification according to the invention comprises the features of the independent method claims.

This invention has an effect of reducing the calculation amount and the memory amount upon performing image classification. Another effect is that higher classification accuracy can be obtained.

BRIEF DESCRIPTION OF DRAWINGS

FIG. 1 is a diagram illustrating a configuration of an inference device according to Embodiment 1 of the invention.
FIG. 2 is a diagram illustrating a hardware configuration of the inference device according to the Embodiment 1 of the invention.
FIG. 3 is a diagram illustrating a hardware configuration when the inference device is constituted by a computer.
FIG. 4 is a flowchart illustrating an inference method which refers to process contents of the inference device according to the Embodiment 1 of the invention.
FIG. 5 is a flowchart illustrating process contents of an input layer activity level calculator 1, a first intermediate layer activity level calculator 5, a second intermediate layer activity level calculator 6, a third intermediate layer activity level calculator 7, and an output layer activity level calculator 9.
FIG. 6 is an explanatory diagram illustrating a hierarchical neural network applied to the inference device according to the Embodiment 1 of the invention.
FIG. 7 is an explanatory diagram illustrating an example of indices, edge weight, and bias values.
FIG. 8 is an explanatory diagram illustrating examples of a loop formed by a plurality of edges.
FIG. 9 is an explanatory diagram illustrating an exemplary neural network in which image data given to an input layer is classified into ten types.
FIG. 10 is an explanatory diagram illustrating an Elman network as a recurrent neural network (RNN) which has edge connections from an input layer to a first intermediate layer, from the first intermediate layer to a second intermediate layer (a context layer), from the second intermediate layer (a context layer) to the first intermediate layer, and from the first intermediate layer to an output layer.
FIG. 11 is a diagram illustrating a configuration of an inference device according to Embodiment 7 of the invention.
FIG. 12 is an explanatory diagram illustrating an exemplary echo state network that is a neural network having edge connections among nodes or a self-connection within the intermediate layer, and also having an edge which connects an input layer with an output layer by skipping an intermediate layer.
FIG. 13 is an explanatory diagram illustrating the echo state network in FIG. 12 by the layer.
FIG. 14 is a diagram illustrating a configuration of an inference device according to an Embodiment 8 of the invention.

DESCRIPTION OF EMBODIMENTS

To describe the invention further in detail, embodiments for carrying out the invention will be described below along the accompanying drawings.

(Embodiment 1)

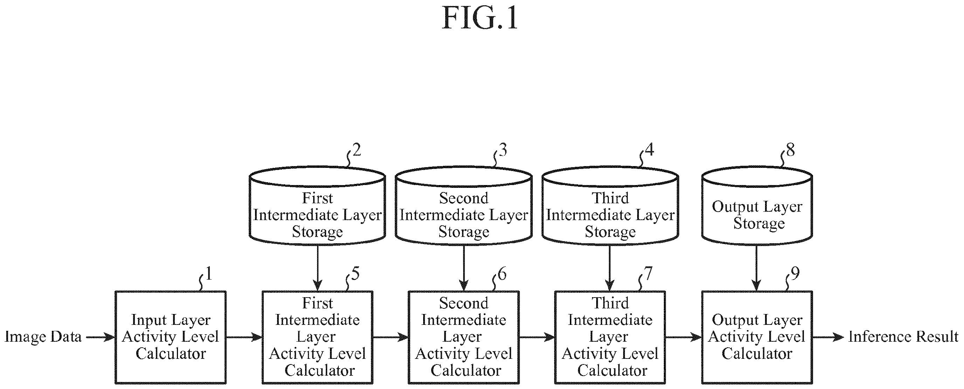

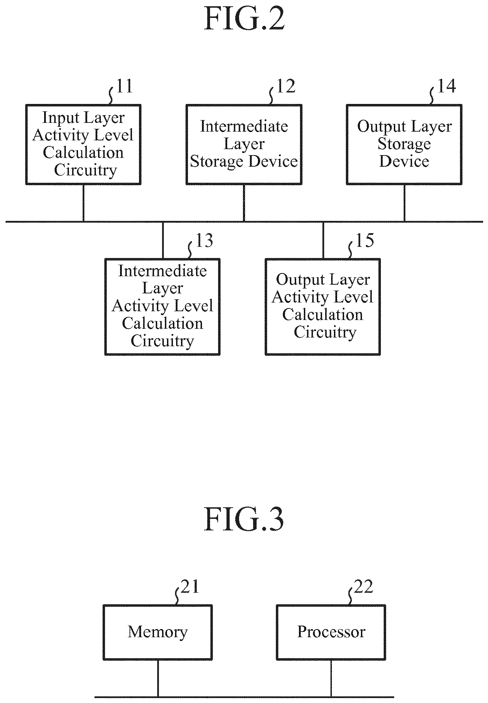

FIG. 1 is a diagram illustrating a configuration of an inference device according to Embodiment 1 of the invention. FIG. 2 is a diagram illustrating a hardware configuration of the inference device according to the Embodiment 1 of the invention.

In FIG. 1, the exemplary inference device using a hierarchical neural network having five layers is illustrated, in which a plurality of nodes are layered into an input layer, a first intermediate layer, a second intermediate layer, a third intermediate layer, and an output layer. In FIG. 1, it is assumed that data given to the input layer is image data.

In this embodiment, although the example of using the hierarchical neural network of the five layers is illustrated, it is not limited to the hierarchical neural network of five layers. A hierarchical neural network of three or four layers, or six or more layers may be used.

Note that, in the case of using a hierarchical neural network of three layers, only a first intermediate layer is included as an intermediate layer. In this case, a second intermediate layer storage 3, a third intermediate layer storage 4, a second intermediate layer activity level calculator 6, and a third intermediate layer activity level calculator 7, which will be described later, are not needed.

In FIGs. 1 and 2, an input layer activity level calculator 1 is implemented by an input layer activity level circuitry 11 which is constituted by a semiconductor integrated circuit or a one-chip microcomputer equipped with a central processing unit (CPU), for example. When the image data is given to each node in the input layer constituting the hierarchical neural network, the input layer activity level calculator 1 performs a process of calculating activity level of each node in the input layer from the image data.

A first intermediate layer storage 2 as an intermediate layer storage is implemented by an intermediate layer storage device 12 which is composed of a storing medium, such as a RAM or a hard disk. The first intermediate layer storage 2 stores an index (or connection information) representing a relation of connection between each node in the first intermediate layer and each node in the input layer, weight applied to each of edges connecting a node in the first intermediate layer and a node in the input layer, and a bias value given to each node in the first intermediate layer.

A second intermediate layer storage 3 as the intermediate layer storage is implemented by the intermediate layer storage device 12 which is composed of a storing medium, such as a RAM or a hard disk. The second intermediate layer storage 3 stores an index representing a relation of connection between each node in the second intermediate layer and each node in the first intermediate layer, weight applied to each of edges connecting a node in the second intermediate layer and a node in the first intermediate layer, and a bias value given to each node in the second intermediate layer.

A third intermediate layer storage 4 as the intermediate layer storage is implemented by the intermediate layer storage device 12 which is composed of a storing medium, such as a RAM or a hard disk. The third intermediate layer storage 4 stores an index representing a relation of connection between each node in the third intermediate layer and each node in the second intermediate layer, weight applied to each of edges connecting a node in the third intermediate layer and a node in the second intermediate layer, and a bias value given to each node in the third intermediate layer.

A first intermediate layer activity level calculator 5 as an intermediate layer activity level calculator is implemented by an intermediate layer activity level circuitry 13 which is constituted by a semiconductor integrated circuit or a one-chip microcomputer equipped with a central processing unit (CPU), for example. The first intermediate layer activity level calculator 5 refers to the index stored in the first intermediate layer storage 2, and acquires, from among the activity levels of the respective nodes in the input layer calculated by the input layer activity level calculator 1 and the weight for the respective edges and the bias values stored in the first intermediate layer storage 2, an activity level of each node in the input layer that is connected with each node in the first intermediate layer, weight for each of edges, and a bias value. The first intermediate layer activity level calculator 5 calculates an activity level of each node in the first intermediate layer by using the acquired activity level of each node in the input layer, the acquired weight for each of the edges, and the acquired bias value.

A second intermediate layer activity level calculator 6 as the intermediate layer activity level calculator is implemented by the intermediate layer activity level circuitry 13 which is constituted by a semiconductor integrated circuit or a one-chip microcomputer equipped with a central processing unit (CPU), for example. The second intermediate layer activity level calculator 6 refers to the index stored in the second intermediate layer storage 3, and acquires, from among the activity levels of the respective nodes in the first intermediate layer calculated by the first intermediate layer activity level calculator 5 and the weight for the respective edges and the bias values stored in the second intermediate layer storage 3, an activity level of each node in the first intermediate layer that is connected with each node in the second intermediate layer, weight for each of edges, and a bias value. The second intermediate layer activity level calculator 6 calculates an activity level of each node in the second intermediate layer by using the acquired activity level of each node in the first intermediate layer, the acquired weight for each of the edges, and the acquired bias value.

A third intermediate layer activity level calculator 7 that is the intermediate layer activity level calculator is implemented by the intermediate layer activity level circuitry 13 which is constituted by a semiconductor integrated circuit or a one-chip microcomputer equipped with a central processing unit (CPU), for example. The third intermediate layer activity level calculator 7 refers to the index stored in the third intermediate layer storage 4, and acquires, from among the activity levels of the respective nodes in the second intermediate layer calculated by the second intermediate layer activity level calculator 6 and the weight for the respective edges and the bias values stored in the third intermediate layer storage 4, an activity level of each node in the second intermediate layer that is connected with each node in the third intermediate layer, weight for each of edges, and a bias value. The third intermediate layer activity level calculator 7 calculates an activity level of each node in the third intermediate layer by using the acquired activity level of each node in the second intermediate layer, the acquired weight for each of the edges, and the acquired bias value.

An output layer storage 8 is implemented by an output layer storage device 14 which is composed of a storing medium, such as a RAM or a hard disk. The output layer storage 8 stores an index (or connection information) representing a relation of connection between each node in the output layer and each node in the third intermediate layer, weight for each of edges connecting a node in the output layer and a node in the third intermediate layer, and a bias value given to each node in the output layer.

An output layer activity level calculator 9 is implemented by an output layer activity level circuitry 15 which is constituted by a semiconductor integrated circuit or a one-chip microcomputer equipped with a central processing unit (CPU), for example. The output layer activity level calculator 9 refers to the index stored in the output layer storage 8, and acquires, from among the activity levels of the respective nodes in the third intermediate layer calculated by the third intermediate layer activity level calculator 7 and the weight for the respective edges and the bias values stored in the output layer storage 8, an activity level of each node in the third intermediate layer that is connected with each node in the output layer, weight for each of edges, and a bias value. The output layer activity level calculator 9 calculates an activity level of each node in the output layer by using the acquired activity level of each node in the third intermediate layer, the acquired weight for each of the edges, and the acquired bias value.

In FIG. 1, it is assumed that the input layer activity level calculator 1, the first intermediate layer storage 2, the second intermediate layer storage 3, the third intermediate layer storage 4, the first intermediate layer activity level calculator 5, the second intermediate layer activity level calculator 6, the third intermediate layer activity level calculator 7, the output layer storage 8, and the output layer activity level calculator 9, each of which are components of the inference device, are individually constituted by dedicated hardware. Alternatively, the inference device may be constituted by a computer.

FIG. 3 is a diagram illustrating a hardware configuration when the inference device is constituted by a computer.

When the inference device is constituted by a computer, the first intermediate layer storage 2, the second intermediate layer storage 3, the third intermediate layer storage 4, and the output layer storage 8 are provided on a memory 21 of the computer. In addition, a program, which describes process contents of the input layer activity level calculator 1, the first intermediate layer activity level calculator 5, the second intermediate layer activity level calculator 6, the third intermediate layer activity level calculator 7, and the output layer activity level calculator 9, is stored in the memory 21 of the computer. Further, a processor 22 of the computer executes the program stored in the memory 21.

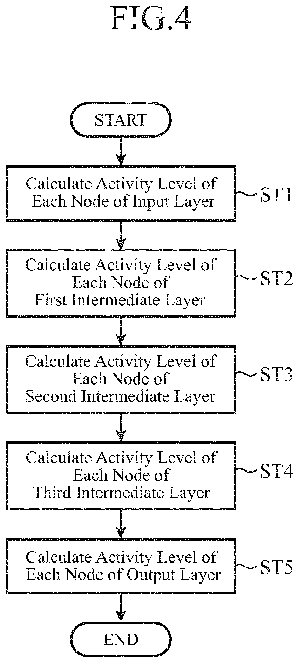

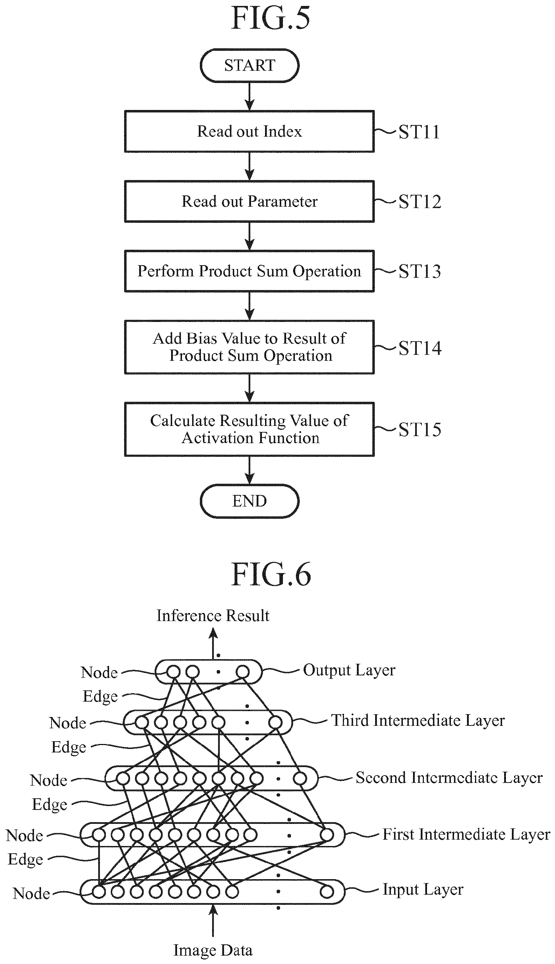

FIG. 4 is a flowchart illustrating an inference method that is process contents of the inference device according to Embodiment 1 of the invention. FIG. 5 is a flowchart illustrating process contents of the input layer activity level calculator 1, the first intermediate layer activity level calculator 5, the second intermediate layer activity level calculator 6, the third intermediate layer activity level calculator 7, and the output layer activity level calculator 9.

FIG. 6 is an explanatory diagram illustrating the hierarchical neural network applied to the inference device according to the Embodiment 1 of the invention.

The hierarchical neural network in FIG. 6 has five layers in which a plurality of nodes are layered into an input layer, a first intermediate layer, a second intermediate layer, a third intermediate layer, and an output layer.

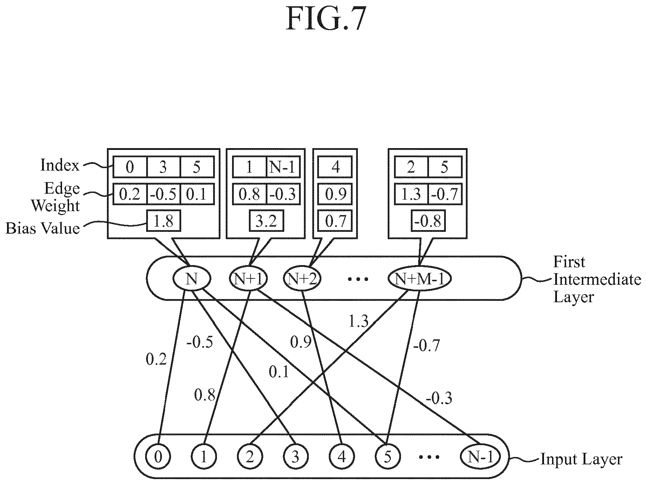

FIG. 7 is an explanatory diagram illustrating an example of indices, edge weight, and bias values.

In FIG. 7, the index as connection information of a node indicates that, for example, node "N" in a first intermediate layer is connected with nodes "0", "3", and "5" in an input layer.

FIG. 7 illustrates that, for example, a weight "0.2" is applied to an edge connecting the node "N" in the first intermediate layer and the node "0" in the input layer, a weight "-0.5" is applied to an edge connecting the node "N" in the first intermediate layer and the node "3" in the input layer, and a weight "0.1" is applied to an edge connecting the node "N" in the first intermediate layer and the node "5" in the input layer.

FIG. 7 further illustrates that, for example, a bias value "1.8" is applied to the node "N" in the first intermediate.

Next, operations will be described.

When image data is given to each node in the input layer constituting the hierarchical neural network, the input layer activity level calculator 1 calculates from the image data an activity level $A_{IN}$ of each node in the input layer (step ST1 in FIG. 4).

In a case where the image data given to the input layer activity level calculator 1 represents, for example, an image composed of pixels having a pixel value P which ranges 0 to 255, and the pixel value P of each of the pixels is provided each node in the input layer, an activity level $A_{IN}$ of each node in the input layer can be calculated by the following formula (1).

$$A_{IN} = \frac{P}{255} \qquad (1)$$

In this example, it is assumed that image data is input, and that normalization is performed by dividing a pixel value P of each pixel by 255, and a floating-point value (0.0 to 1.0) is obtained as the activity level $A_{IN}$ of each node in the input layer. Alternatively, a process, such as data thinning, quantization, or conversion, may be performed depending to the type of input data in addition to simple normalization.

After the input layer activity level calculator 1 calculates the activity level $A_{IN}$ of each node in the input layer, the first intermediate layer activity level calculator 5 refers to the index stored in the first intermediate layer storage 2, confirms each node in the input layer connected with a node in the first intermediate layer for each node in the first intermediate layer, and acquires the activity level $A_{IN}$ of each node in the input layer.

Specifically, for example, in the case of the node "N" in the first intermediate layer, the index stored in the first intermediate layer storage 2 represents connection to the nodes "0", "3", and "5" in the input layer. Thus, activity levels $A_{IN-0}$, $A_{IN-3}$, and $A_{IN-5}$ of the nodes "0", "3", and "5" in the input layer are acquired from among the activity levels $A_{IN}$ of the respective nodes in the input layer having been calculated by the input layer activity level calculator 1.

The first intermediate layer activity level calculator 5 further refers to the index stored in the first intermediate layer storage 2, confirms an edge connected with a node in the first intermediate layer for each node in the first intermediate layer, and acquires weight w for the edge from the first intermediate layer storage 2.

Specifically, for example, in the case of the node "N" in the first intermediate layer, the index stored in the first intermediate layer storage 2 represents connection to the nodes "0", "3", and "5" in the input layer. Thus, a value "0.2" is acquired as weight $w_{N-0}$ for the edge connecting the node "N" in the first intermediate layer and the node "0" in the input layer, and a value "-0.5" is acquired as weight $w_{N-3}$ for the edge connecting the node "N" in the first intermediate layer and the node "3" in the input layer. Further, a value "0.1" is further acquired as weight $w_{N-5}$ for the edge connecting the node "N" in the first intermediate layer and the node "5" in the input layer.

The first intermediate layer activity level calculator 5 further acquires, for each node in the first intermediate layer, a bias value $B_{1M}$ of a node in the first intermediate layer from the first intermediate layer storage 2.

For example, in the case of the node "N" in the first intermediate layer, a value "1.8" is acquired as a bias value $B_{1M-N}$.

After acquiring, for each node in the first intermediate layer, the activity level $A_{IN}$ of each node in the input layer, the weight w, and the bias value $B_{1M}$, the first intermediate layer activity level calculator 5 calculates an activity level $A_{1M}$ for each node in the first intermediate layer by using the acquired activity level $A_{IN}$, weight w, and bias value $B_{1M}$ (step ST2).

Exemplary calculation of an activity level $A_{1M-N}$ of the node "N" in the first intermediate layer will be described specifically below.

First, the first intermediate layer activity level calculator 5 reads out the index stored in the first intermediate layer storage 2 (step ST11 in FIG. 5). By referring to the index, the first intermediate layer activity level calculator 5 acquires, as a parameter used for calculation of an activity level, the activity levels $A_{IN-0}$, $A_{IN-3}$, and $A_{IN-5}$ in the nodes "0", "3", and "5" in the input layer, the weight $w_{N-0}$, $w_{N-3}$, and $w_{N-5}$, for edges thereof, and the bias value $B_{1M-N}$ of the node "N" in the first intermediate layer (step ST12).

The first intermediate layer activity level calculator 5 performs product sum operation, as represented by the following formula (2), on between the activity levels $A_{IN-0}$, $A_{IN-3}$, and $A_{IN-5}$ of the nodes "0", "3", and "5" in the input layer, and the weight $w_{N-0}$, $w_{N-3}$, and $w_{N-5}$ for the edges (step ST13).

$$MADD = A_{IN-0} \times w_{N-0} + A_{IN-3} \times w_{N-3} + A_{IN-5} \times w_{N-5} \qquad (2)$$

The first intermediate layer activity level calculator 5 then adds the bias value $B_{1M-N}$ of the node "N" in the first intermediate layer to the operation result MADD of the product sum operation, as represented by the following formula (3) (step ST14).

$$ADD = MADD + B_{1M\text{-}N} \qquad (3)$$

As an activation function F applied to the neural network, which is used for calculation of an activity level, a linear function, a sigmoid function, a softmax function, a rectified linear unit (ReLU) function, or other functions, are prepared in advance for the first intermediate layer activity level calculator 5. The first intermediate layer activity level calculator 5 calculates, as the activity level $A_{1M\text{-}N}$ of the node "N" in the first intermediate layer, a resulting value of the activation function F with the addition result ADD of the formula (3) as an argument of the activation function F, as represented by the following formula (4) (step ST15).

$$A_{1M\text{-}N} = F(ADD) \qquad (4)$$

The exemplary calculation of the activity level $A_{1M\text{-}N}$ of the node "N" in the first intermediate layer has been described here. The activity levels $A_{1M}$ of other nodes in the first intermediate layer are also calculated in a similar manner.

After the first intermediate layer activity level calculator 5 has calculated the activity levels $A_{1M}$ of the respective nodes in the first intermediate layer, the second intermediate layer activity level calculator 6 calculates an activity level $A_{2M}$ of each node in the second intermediate layer (step ST3 in FIG. 4).

A calculation method of the activity level $A_{2M}$ of each node in the second intermediate layer by the second intermediate layer activity level calculator 6 is similar to the calculation method of the activity level $A_{1M}$ of each node in the first intermediate layer by the first intermediate layer activity level calculator 5.

That is, the second intermediate layer activity level calculator 6 refers to the index stored in the second intermediate layer storage 3, confirms each node in the first intermediate layer connected with a node in the second intermediate layer for each node in the second intermediate layer, and acquires the activity level $A_{1M}$ of each node in the first intermediate layer.

The second intermediate layer activity level calculator 6 refers to the index stored in the second intermediate layer storage 3, confirms an edge connected with a node in the second intermediate layer for each node in the second intermediate layer, and acquires weight w for the edge from the second intermediate layer storage 3.

The second intermediate layer activity level calculator 6 acquires a bias value $B_{2M}$ of a node in the second intermediate layer from the second intermediate layer storage 3 for each node in the second intermediate layer.

After acquiring, for each node in the second intermediate layer, the activity level $A_{1M}$ of each node in the first intermediate layer, the weight w, and the bias value $B_{2M}$ of the edge, the second intermediate layer activity level calculator 6 calculates the activity level $A_{2M}$ for each node in the second intermediate layer by using the acquired activity level $A_{1M}$, weight w, and bias value $B_{2M}$ through a calculation method similar to that of the first intermediate layer activity level calculator 5.

After the second intermediate layer activity level calculator 6 has calculated the activity levels $A_{2M}$ of the respective nodes in the second intermediate layer, the third intermediate layer activity level calculator 7 calculates an activity level $A_{3M}$ of each node in the third intermediate layer (step ST4).

A calculation method of the activity level $A_{3M}$ of each node in the third intermediate layer by the third intermediate layer activity level calculator 7 is similar to the calculation method of the activity level $A_{1M}$ of each node in the first intermediate layer by the first intermediate layer activity level calculator 5.

That is, the third intermediate layer activity level calculator 7 refers to the index stored in the third intermediate layer storage 4, confirms each node in the second intermediate layer connected with a node in the third intermediate layer for each node in the third intermediate layer, and acquires the activity level $A_{2M}$ of each node in the second intermediate layer.

The third intermediate layer activity level calculator 7 refers to the index stored in the third intermediate layer storage 4, confirms an edge connected with a node in the third intermediate layer for each node in the third intermediate layer, and acquires weight w of the edge from the third intermediate layer storage 4.

The third intermediate layer activity level calculator 7 acquires, for each node in the third intermediate layer, a bias value $B_{3M}$ of a node in the third intermediate layer from the third intermediate layer storage 4.

After acquiring the activity level $A_{2M}$ of each node in the second intermediate layer, the weight w and the bias value $B_{3M}$ of the edge for each node in the third intermediate layer, the third intermediate layer activity level calculator 7 calculates the activity level $A_{3M}$ for each node in the third intermediate layer by using the acquired activity level $A_{2M}$, weight w, and bias value $B_{3M}$ through a calculation method similar to that of the first intermediate layer activity level calculator 5.

After the third intermediate layer activity level calculator 7 has calculated the activity levels $A_{3M}$ of the respective nodes in the third intermediate layer, the output layer activity level calculator 9 calculates an activity level $A_{OUT}$ of each node in the output layer (step ST5).

A calculation method of the activity level $A_{OUT}$ of each node in the output layer by the output layer activity level calculator 9 is similar to the calculation method of the activity level $A_{1M}$ of each node in the first intermediate layer by the first intermediate layer activity level calculator 5.

That is, the output layer activity level calculator 9 refers to the index stored in the output layer storage 8, confirms each node in the third intermediate layer connected with a node in the output layer for each node in the output layer, and acquires the activity level $A_{3M}$ of each node in the third intermediate layer.

The output layer activity level calculator 9 refers to the index stored in the output layer storage 8, confirms an edge connected with a node in the output layer for each node in the output layer, and acquires weight w of the edge from the output layer storage 8.

The output layer activity level calculator 9 acquires, for each node in the output layer, a bias value $B_{OUT}$ of a node in the output layer from the output layer storage 8.

After acquiring the activity level $A_{3M}$ of each node in the third intermediate layer, the weight w and the bias value $B_{OUT}$ of the edge for each node in the output layer, the output layer activity level calculator 9 calculates the activity level $A_{OUT}$ for each node in the output layer by using the acquired activity level $A_{3M}$, weight w, and bias value $B_{OUT}$ through a calculation method similar to that of the first intermediate layer activity level calculator 5.

The activity level $A_{OUT}$ for each node in the output layer calculated by the output layer activity level calculator 9 is output as an inference result of the inference device.

Specifically, for example, in a case of identifying an object captured in an image as one from among a person, a dog, a cat, and a car, the output layer is formed by four nodes. In this case, an activity level of each node is learned to be a value representing possibility of a person, a dog, a cat, or a car.

When performing inference, a node having the largest activity level in the output layer is selected. If, for example, the selected node is the one for outputting possibly of a cat, "cat" is output as an inference result. Not only the simple identification result, but also processes of calculating reliability using an activity level or outputting a regression estimation value may be performed.

As apparent from the above, according to the Embodiment 1, the first intermediate layer activity level calculator 5 refers to the index stored in the first intermediate layer storage 2, acquires, from among the activity levels of respective nodes in the input layer calculated by the input layer activity level calculator 1 and weight for respective edges and bias values stored in the first intermediate layer storage 2, an activity level of each node in the input layer that has connection with each node in the first intermediate layer and weight for each of edges and a bias value thereof, and calculates an activity level of each node in the first intermediate layer using the activity level of each node in the input layer and the weight for each of the edges and the bias value having been acquired. This is capable of achieving effects of reducing the calculation amount and the memory amount upon performing inference.

In other words, the first intermediate layer activity level calculator 5 is only required to perform calculation on each node in the input layer that has connection with each node in the first intermediate layer, and thus the calculation amount and the memory amount upon performing inference can be drastically reduced.

Moreover, the second intermediate layer activity level calculator 6 is also only required to perform calculation on each node in the first intermediate layer that has connection with nodes in the second intermediate layer and thus the calculation amount and the memory amount upon performing inference can be drastically reduced similarly to the first intermediate layer activity level calculator 5.

Likewise, the third intermediate layer activity level calculator 7 is also only required to perform calculation on each node in the second intermediate layer that has connection with nodes in the third intermediate layer and thus the calculation amount and the memory amount upon performing inference can be drastically reduced similarly to the first intermediate layer activity level calculator 5.

Furthermore, the output layer activity level calculator 9 is also only required to perform calculation on each node in the third intermediate layer that is connected with nodes in the output layer and thus the calculation amount and the memory amount upon performing inference can be drastically reduced similarly to the first intermediate layer activity level calculator 5.

In the Embodiment 1, the first intermediate layer activity level calculator 5, the second intermediate layer activity level calculator 6, the third intermediate layer activity level calculator 7, and the output layer activity level calculator 9 perform the product sum operation on between an activity level of each node in a preceding layer and weight for an edge thereof upon calculating an activity level of each node. Alternatively, instead of the addition result ADD in the formula (3), the maximum value or an average value of activity levels of the respective nodes in the preceding layer may be used.

(Embodiment 2)

In the Embodiment 1 described above, each node in each of the layers constituting the neural network applied to the inference device is not connected with all nodes in a preceding or a succeeding layer, but is connected with part of the nodes.

Even in this case where each node in each of the layers is connected with part of the nodes in a preceding or a succeeding layer, a loop may be formed by a plurality of edges connecting the nodes depending on a mode of connection among the nodes.

In a neural network, a specific path is called a loop, which starts from a certain node and returns to this node by passing through each edge only once. The number of edges forming a loop is herein called the length of the loop.

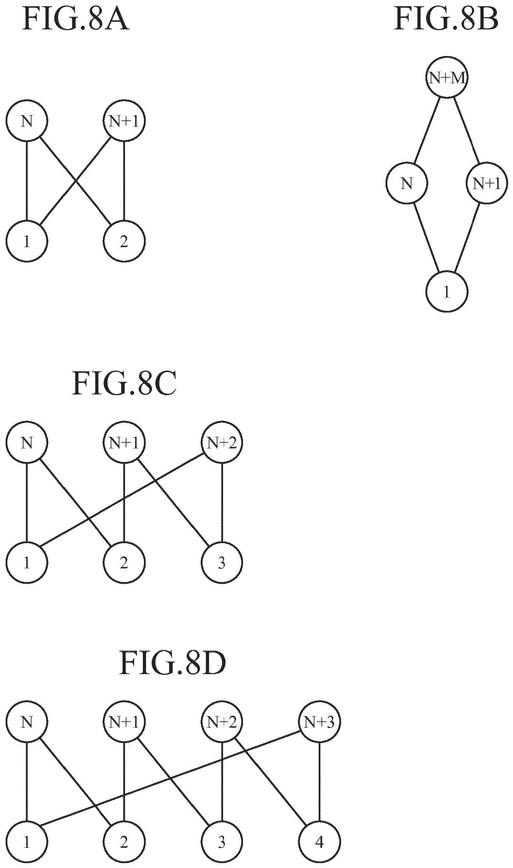

FIG. 8 is an explanatory diagram illustrating exemplary loops formed by a plurality of edges.

FIGs. 8A and 8B illustrate an exemplary loop formed by four edges. FIG. 8C illustrates an exemplary loop formed by six edges. FIG. 8D illustrates an exemplary loop formed by eight edges.

In a hierarchical neural network for example, a loop having a length of 4 may be formed at the shortest. Especially, the loop having a length of 4 may cause deterioration of the inference accuracy because gradient calculation information tends to propagate by an error backpropagation method upon learning. Also in a model that performs inference by bidirectional information propagation, such as a probability propagation method in a Bayesian network, a short loop causes circulation of propagation information, thereby inducing deterioration of the inference accuracy.

For the reason above, in the Embodiment 2, a neural network applied to an inference device is limited to the one in which each loop is formed by six or more edges when edges connecting nodes in respective layers constituting a neural network form loops. Such the edges may be edges connecting nodes in a first intermediate layer and nodes in an input layer, edges connecting nodes in a second intermediate layer and the nodes in the first intermediate layer, edges connecting nodes in a third intermediate layer and the nodes in the second intermediate layer, and edges connecting nodes in an output layer and the nodes in the third intermediate layer.

Accordingly, in the Embodiment 2, a neural network in which a loop is formed by four edges, as illustrated in FIGs. 8A and 8B, is not applied to an inference device. In contrast, a neural network in which a loop is formed by six or eight edges, as illustrated in FIGs. 8C and 8D, may be applied to an inference device.

This configuration is capable achieving effects of suppressing deterioration of the inference accuracy attributable to a short loop in a neural network. In other words, the calculation amount and the memory amount can be reduced while maintaining inference accuracy.

(Embodiment 3)

In the Embodiment 1 described above, each node in each of the layers constituting the neural network applied to the inference device is not connected with all nodes in a preceding or a succeeding layer, but is connected with part of the nodes.

Each node in the first intermediate layer may be connected with part of all nodes in the input layer, which are randomly selected from among the all nodes.

Similarly, each node in the second intermediate layer may be connected with part of all nodes in the first intermediate layer, which are randomly selected from among the all nodes. Moreover, each node in the third intermediate layer may be connected with part of all nodes in the second intermediate layer, which are randomly selected from among the all nodes.

Further similarly, each node in the output layer may be connected with part of all nodes in the third intermediate layer, which are randomly selected from among the all nodes.

For the random selection, a criterion may be set such that an average number of connections per node in each of the layers (the output layer, the third intermediate layer, the second intermediate layer, and the first intermediate layer) with nodes in a preceding layer (the third intermediate layer, the second intermediate layer, the first intermediate layer, and the input layer, respectively) is fifty or less.

Alternatively, another criterion may be imposed that an average number of connections per node in each of the layers (the output layer, the third intermediate layer, the second intermediate layer, and the first intermediate layer) with nodes in a preceding layer (the third intermediate layer, the second intermediate layer, the first intermediate layer, and the input layer, respectively) is one-tenth or less of the number of nodes in the preceding layer.

In a mode where each node in each layer is connected with all nodes in a preceding layer, if assuming that the number of nodes in each layer is M and the number of nodes in a preceding layer is N, the calculation amount of activity levels and the memory amount in each layer is in $N \times M$ orders. In contrast, by setting the criterion that an average number of connections n (n<N) per node in each of the layers with nodes in a preceding layer is fifty or less or one-tenth or less of the number of nodes N in the preceding layer, it is possible to reduce the probability of occurrence of a short loop, suppress deterioration of the inference accuracy, and also reduce the calculation amount and the memory amount.

(Embodiment 4)

In the Embodiment 1 described above, each node in each of the layers constituting the neural network applied to the inference device is not connected with all nodes in a preceding or a succeeding layer, but is connected with part of the nodes.

Each node in the first intermediate layer may be connected with part of all nodes in the input layer, which are not adjacent to each other.

Similarly, each node in the second intermediate layer may be connected with part of all nodes in the first intermediate layer, which are not adjacent to each other. Moreover, each node in the third intermediate layer may be connected with part of all nodes in the second intermediate layer, which are not adjacent to each other.

Further similarly, each node in the output layer may be connected with part of all nodes in the third intermediate layer, which are not adjacent to each other.

For example, in the case of the node "N" in the first intermediate layer, the node "N" in the first intermediate layer is allowed to connect with the nodes "0" and "3" in the input layer because these nodes are not adjacent to each other in the input layer. However, the node "N" in the first intermediate layer is not allowed to connect with a pair of nodes "0" and "1" in the input layer because these nodes are adjacent to each other in the input layer.

In Embodiment 4, a criterion for permitted connections of nodes may be set such that an average number of connections per node in each of the layers (the output layer, the third intermediate layer, the second intermediate layer, and the first intermediate layer) with nodes in a preceding layer (the third intermediate layer, the second intermediate layer, the first intermediate layer, and the input layer, respectively) is fifty or less.

Alternatively, another criterion may be set such that an average number of connections per node in each of the layers (the output layer, the third intermediate layer, the second intermediate layer, and the first intermediate layer) with nodes in a preceding layer (the third intermediate layer, the second intermediate layer, the first intermediate layer, and the input layer, respectively) is one-tenth or less of the number of nodes in the preceding layer.

By setting the above criteria, it is possible to reduce the probability of occurrence of a short loop, suppress deterioration of the inference accuracy, and also reduce the calculation amount and the memory amount.

(Embodiment 5)

In the Embodiments 1 to 4 described above, the neural network applied to the inference device is exemplified by a neural network of a hierarchical feed-forward type having three intermediate layers. Alternatively, the number of intermediate layers may be larger or smaller than three, and intermediate layers may not be formed such as a structure formed by a logistic regression model.

Furthermore, combination with a conventional method of neural networks may be implemented, such as a layer connecting all nodes between layers, a convolutional layer or a pooling layer as in a convolutional neural network, or long short-term memory (LSTM) blocks in a recurrent neural network.

In the convolutional neural network has a configuration in which the convolutional layer and the pooling layer are alternated. The convolutional layer is in charge of extracting local features in an image, and the pooling layer summarizes features for each local part.

In the Embodiments 1 to 4 described above, the neural network applied to the inference device is exemplified by a neural network of a hierarchical feed-forward type. The neural network may include connection skipping a layer, connection between nodes belonging to the same layer, a self-connection in which a connection destination and a connection source are the same, or circulating connection in which edges form a loop (i.e., a recurrent neural network).

Furthermore, a neural network that performs inference by using other graph structures may be employed, such as a self-organizing MAP (SOM), a content addressable model, a Hopfield network, or a Boltzmann machine. Moreover, without limited to a neural network, a network performing inference by using other graphs may be employed, such as a Bayesian network.

In the Embodiments 1 to 4 described above, one-dimensional indices are allotted, such as the nodes 0, 1, ..., N - 1 in the input layer and the nodes N, N + 1, ..., N + M - 1 in the first intermediate layer. Alternatively, two-dimensional indices may be allotted, such as (0, 0), (0, 1), ..., (0, N - 1) for nodes in the input layer and (1, 0), (1, 1), ..., (1, M - 1) for nodes in the first intermediate layer. Furthermore, addresses in the memory may be used as the indices, and other indices may be allotted.

In the Embodiments 1 to 4 described above, the neural network applied to the inference device is exemplified by the case where the number of edges and the number of values of edge weight are the same. Alternatively, a plurality of values of edge weight may be shared like a convolutional filter coefficient in a convolutional network.

In the Embodiments 1 to 4 described above, a calculation process of an activity level in each node is described in an order. Alternatively, calculations which do not dependent on each other may be parallelized by using a plurality of CPUs or GPUs to speed up the calculation process.

In the Embodiments 1 to 4 described above, an example of an image classification system that receives image data and classifies the image is described. Alternatively, the inference device is generally applicable to an inference system which outputs any inference result in response to input data as long as an instruction signal corresponding to the data is prepared and thus supervised learning can be performed.

As examples for the inference result, a position or a size of a desired object area may be output after inputting the image, or a text explaining an image may be output after inputting the image. Further, after inputting an image including noise, a new image, from which the noise has been removed, may be output. Moreover, after inputting an image and a text, the image may be converted in accordance with the text.

Further, after inputting vocal sound, a phoneme and a word may be output, or a predicted word to be uttered next may be output, or appropriate response sound may be output. Alternatively, after inputting a text with a certain language, another text in another language may be output. Further alternatively, after inputting a time series, a predicted time series of the future may be output, or an estimate state of the time series may be output.

In the Embodiments 1 to 4 described above, an exemplary system is described to perform inference by a model which has learned by supervised learning using an instruction signal corresponding to data. Alternatively, another system may be employed, which performs inference by a model having learned by unsupervised learning using data without an instruction signal or semi-supervised learning.

In the Embodiments 1 to 4 described above, the example has been described, in each of which the inference device receives image data from a data input device (not illustrated) and calculates an activity level of each node in the first intermediate layer. Alternatively, the data input device not illustrated may calculate an activity level of each node in the first intermediate layer, while an activity level of each node in the second intermediate layer, the third intermediate layer, and the output layer may be calculated by the inference device. In this case, when dimensionality of output from the data input device is smaller than dimensionality of input, the data input device has a function of compressing data.

In the Embodiments 1 to 4 described above, the example has been described, in which an activity level is calculated only once for each node. Alternatively, like in a probability propagation method in a Bayesian network, nodes may repeatedly exchange information for a plurality of times to enhance the inference accuracy.

(Embodiment 6)

In the Embodiments 1 to 4 described above, as the neural network applied to the inference device, an example has been described, in which all of the layers excluding the input layer hold indices of edge connections. Alternatively, only part of the layers may hold indices of edge connections while other layers have edge connections similar to those of a normal neural network.

The index of edge connections is intended to include edge weight and a bias value such as illustrated in FIG. 7.

Moreover, the edge connections similar to those of a normal neural network is intended to mean edge connections connected with all nodes in a destination layer (edge connection of a full connection layer) as well as edge connections of a known neural network, such as a convolutional layer or a pooling layer, each of which is connected with nodes in a destination layer or adjacent nodes thereof.

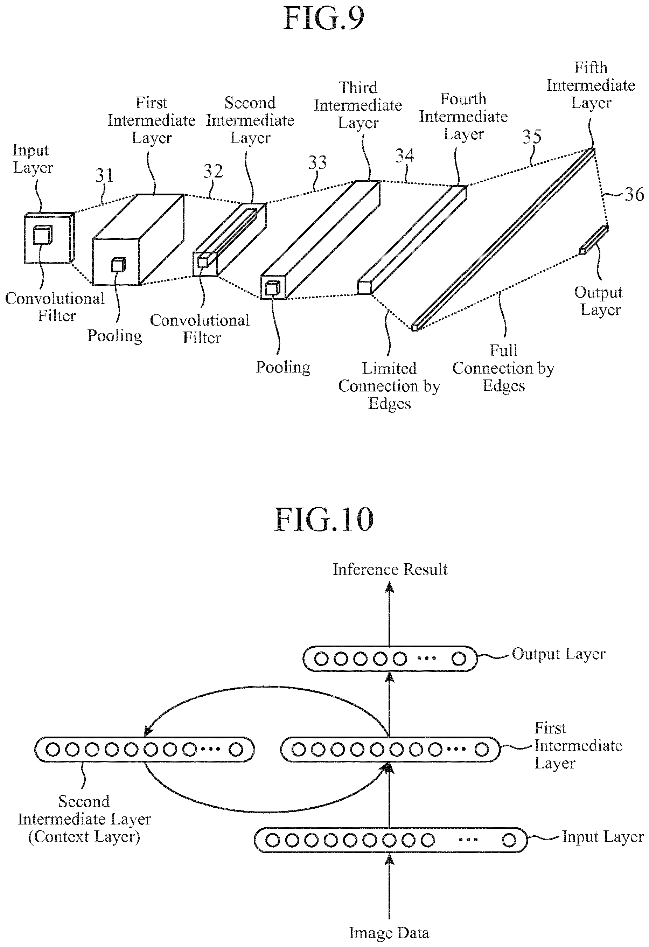

FIG. 9 is an explanatory diagram illustrating an exemplary neural network in which image data given to an input layer is classified into ten types.

In the example in FIG. 9, five intermediate layers are connected between an input layer and an output layer, that is, a first intermediate layer, a second intermediate layer, a third intermediate layer, a fourth intermediate layer, and a fifth intermediate layer are connected.

In the example in FIG. 9, a convolutional layer 31 is specified by the input layer to the first intermediate layer, a pooling layer 32 is specified by the first intermediate layer to the second intermediate layer, a convolutional layer 33 is specified by the second intermediate layer to the third intermediate layer, and a pooling layer 34 is specified by the third intermediate layer to the fourth intermediate layer. Further, an index-holding layer 35 described in the above Embodiments 1 to 4 is specified by the fourth intermediate layer to the fifth intermediate layer, and a full connection layer 36 is specified by the fifth intermediate layer to the output layer.

Similarly to the first intermediate layer illustrated in FIG. 7, each node in the fifth intermediate layer holds an index representing nodes in the fourth intermediate layer as connection sources, and edge weight and a bias value corresponding to the connections.

When image data given to the input layer has, for example, "60 × 60" (height × width) pixels, an input layer including "3600" (= 60 × 60 × 1) nodes is required for the neural network of FIG. 9.

In this case, for example, when a filter size of the convolutional layer 31 from the input layer to the first intermediate layer is "5 × 5 × 1", the number of maps in the convolutional layer 31 is "100", and the pooling layer 32 from the first intermediate layer to the second intermediate layer and the pooling layer 34 from the third intermediate layer to the fourth intermediate layer performs the maximum pooling having a filter size of "2 × 2 × 1", the size of the first intermediate layer equals "56 × 56 × 100" (= (60 - 5 + 1) × (60 - 5 + 1) × 100), and also the size of the second intermediate layer equals "28 × 28 × 100" (= (56/2) × (56/2) × 100).

Further, the size of the third intermediate layer equals "24 × 24 × 200" (= (28 - 5 + 1) × (28 - 5 + 1) × 200), the size of the fourth intermediate layer equals "12 × 12 × 200" (= (24/2) × (24/2) × 200), the size of the fifth intermediate layer equals "1 × 1 × 1000", and the number of nodes in the output layer equals "1 × 1 × 10".

Note that, a rectified linear unit (ReLU) may be used as an activation function for calculating a propagation value upon propagating information from the input layer to the first intermediate layer, an activation function for calculating a propagation value upon propagating information from the second intermediate layer to the third intermediate layer, and an activation function for calculating a propagation value upon propagating information from the fourth intermediate layer to the fifth intermediate layer. In addition, a softmax function being a normalized exponential function is used as activation function for calculating a propagation value upon propagating information from the fifth intermediate layer to the output layer.

The convolutional layers 31 and 33 and the pooling layers 32 and 34 from the input layer to the fourth intermediate layer enable the neural network of FIG. 9 to robustly extract the feature amount from image data in spite of change in the position of the image.

In addition, the index-holding layer from the fourth intermediate layer to the fifth intermediate layer is capable of drastically reducing the calculation amount and the memory amount upon performing inference, similarly to the Embodiments 1 to 4 described above.

In this Embodiment 6, an example is described, in which image data is given to the input layer. Alternatively, data given to the input layer is not limited to image data, but may be a sensor signal being data observed by a sensor or other data, such as sound or texts, for example.

In this Embodiment 6, an example is described, in which image data given to the input layer is classified into ten types. Alternatively, inference other than that for classifying image data may be performed by modifying the output layer that constitutes the neural network.

For example, inference such as a denoising process for removing noise from image data, or regressive prediction, or likelihood calculation may be performed.

Furthermore, the number of nodes in each layer or the filter size may be modified depending on an object of inference.

In the neural network in FIG. 9, the example is described, in which the convolutional layer 31, the pooling layer 32, the convolutional layer 33, the pooling layer 34, the index-holding layer 35, and the full connection layer 36 are connected by edges in this order. However, the layers may be connected by edges in an order other than the above-mentioned order as long as at least a single layer that holds indices described in the Embodiments 1 to 4 is connected. Alternatively, the pooling layers 32 and 34 may not be connected.

(Embodiment 7)

In the Embodiments 1 to 6, the example is described, in which the neural network applied to the inference device is a feed-forward neural network (FFNN) which does not form a directed loop. Alternatively, the inference device may employ a recurrent neural network (RNN) in which part of the network forms the directed loop. In this case, part of layers in the recurrent neural network may be the index-holding layer described in the above Embodiments 1 to 4.

FIG. 10 is an explanatory diagram illustrating an Elman network being the recurrent neural network (RNN) which has edge connections from an input layer to a first intermediate layer, from the first intermediate layer to a second intermediate layer (context layer), from the second intermediate layer (context layer) to the first intermediate layer, and from the first intermediate layer to an output layer.

In the Elman network of FIG. 10, it is assumed that the number of nodes in the second intermediate layer (context layer) is equivalent to the number of nodes in the first intermediate layer.

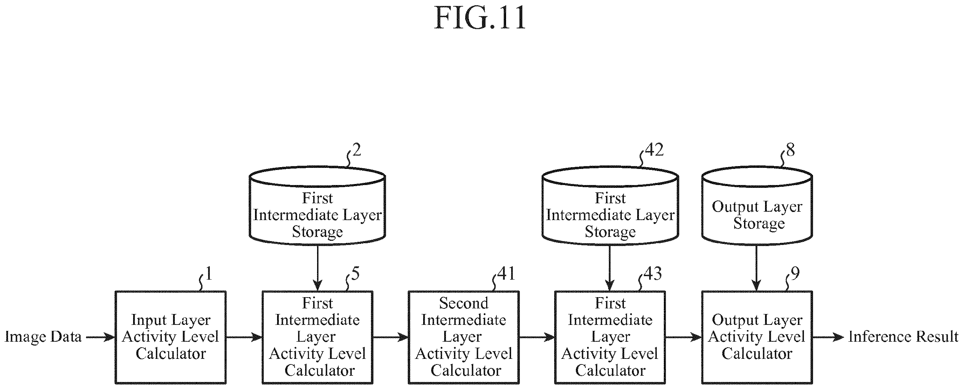

FIG. 11 is a diagram illustrating a configuration of an inference device according to Embodiment 7 of the invention. In FIG. 11, the same symbol as that in FIG. 1 represents the same or a corresponding part and thus descriptions thereon are omitted.

The second intermediate layer activity level calculator 41 being an intermediate layer activity level calculator is implemented by the intermediate layer activity level circuitry 13 consists of, for example a semiconductor integrated circuit or a one-chip microcomputer equipped with a CPU. The second intermediate layer activity level calculator 41 performs a process of copying an activity level of each node in the first intermediate layer as an activity level of each node in the second intermediate layer (context layer).

In this Embodiment 7, the example is describe, in which the second intermediate layer activity level calculator 41 copies an activity level of each node in the first intermediate layer as an activity level of each node in the second intermediate layer (context layer). However, this is a mere example. Alternatively, an activity level of each node in the second intermediate layer (context layer) may be calculated by the formula (1), similarly to the input layer activity level calculator 1.

A first intermediate layer storage 42 being an intermediate layer storage is implemented by the intermediate layer storage device 12 which consists of a storing medium, such as a RAM or a hard disk. The first intermediate layer storage 42 stores an index representing a relation of connection between each node in the first intermediate layer and each node in the second intermediate layer (context layer), weight for each of edges connecting a node in the first intermediate layer and a node in the second intermediate layer, and a bias value given to each node in the first intermediate layer.

A first intermediate layer activity level calculator 43 being the intermediate layer activity level calculator is implemented by the intermediate layer activity level circuitry 13 which consists of a semiconductor integrated circuit or a one-chip microcomputer equipped with a CPU, for example. The first intermediate layer activity level calculator 43 refers to the index stored in the first intermediate layer storage 42, acquires, from among the activity levels of the respective nodes in the second intermediate layer (context layer) calculated by the second intermediate layer activity level calculator 41 and the weight for respective edges and bias values stored in the first intermediate layer storage 42, an activity level of each node in the second intermediate layer (context layer) that has connection with each node in the first intermediate layer, and also acquires weight for each of edges and a bias value, The first intermediate layer activity level calculator 43 performs a process of calculating an activity level of each node in the first intermediate layer by using the acquired activity level of each node in the second intermediate layer (context layer) and the acquired weight for each of the edges and the acquired bias value.

In FIG. 11, it is assumed that each of the input layer activity level calculator 1, the first intermediate layer storage 2, the first intermediate layer activity level calculator 5, the second intermediate layer activity level calculator 41, the first intermediate layer storage 42, the first intermediate layer activity level calculator 43, the output layer storage 8, and the output layer activity level calculator 9, that are components of the inference device, is constituted by dedicated hardware. Alternatively, the inference device may be constituted by a computer.

When the inference device is constituted by a computer, the first intermediate layer storage 2, the first intermediate layer storage 42, and the output layer storage 8 are provided on the memory 21 of the computer illustrated in FIG. 3. In addition, a program, which describes process contents of the input layer activity level calculator 1, the first intermediate layer activity level calculator 5, the second intermediate layer activity level calculator 41, the first intermediate layer activity level calculator 43, and the output layer activity level calculator 9, is stored in the memory 21 of the computer illustrated in FIG. 3. Further, the processor 22 of the computer executes the program stored in the memory 21.

Next, operations will be described.

Note that operations of components other than the second intermediate layer activity level calculator 41, the first intermediate layer storage 42, and the first intermediate layer activity level calculator 43 are similar to those in the Embodiment 1 as described above. Thus, only the operations of the second intermediate layer activity level calculator 41, the first intermediate layer storage 42, and the first intermediate layer activity level calculator 43 will be described.

The first intermediate layer activity level calculator 5 calculates an activity level $A_{1M}$ of each node in the first intermediate layer by using an activity level of each node in the input layer having been calculated by the input layer activity level calculator 1, similarly to the Embodiment 1. After that, the second intermediate layer activity level calculator 41 copies the activity level $A_{1M}$ of each node in the first intermediate layer as an activity level $A_{2M}$ of each node in the second intermediate layer (context layer).

As a result, the activity level $A_{2M}$ of each node in the second intermediate layer at a time t becomes equivalent to the activity level $A_{1M}$ of each node in the first intermediate layer at the time t.

After the second intermediate layer activity level calculator 41 has obtained the activity levels $A_{2M}$ of the respective nodes in the second intermediate layer (context layer), the first intermediate layer activity level calculator 43 calculates an activity level $A'_{1M}$ of each node in the first intermediate layer.

A calculation method for the activity level $A'_{1M}$ of each node in the first intermediate layer used by the first intermediate layer activity level calculator 43 is similar to the calculation method of the activity level $A_{1M}$ of each node in the first intermediate layer used by the first intermediate layer activity level calculator 5.

That is, the first intermediate layer activity level calculator 43 refers to the index stored in the first intermediate layer storage 42, confirms each node in the second intermediate layer (context layer) connected with a node in the first intermediate layer for each node in the first intermediate layer, and acquires the activity level $A_{2M}$ of each node in the second intermediate layer (context layer).

In addition, the first intermediate layer activity level calculator 43 refers to the index stored in the first intermediate layer storage 42, confirms an edge connected with a node in the first intermediate layer (edge connected with a node in the second intermediate layer) for each node in the first intermediate layer, and acquires weight w for the edge from the first intermediate layer storage 42.

The first intermediate layer activity level calculator 43 further acquires a bias value $B_{1M}$ of a node in the first intermediate layer from the first intermediate layer storage 42 for each node in the first intermediate layer.

After acquiring the activity level $A_{2M}$ of each node in the second intermediate layer (context layer), the weight w of the edge and the bias value $B_{1M}$ for each node in the first intermediate layer (context layer), the first intermediate layer activity level calculator 43 calculates the activity level $A'_{1M}$ for each node in the first intermediate layer by using the acquired activity level $A_{2M}$, the acquired weight w of the edge, and the acquired bias value $B_{1M}$ by a calculation method which is similar to that of the first intermediate layer activity level calculator 5.

After the first intermediate layer activity level calculator 43 has calculated the activity level $A'_{1M}$ of the respective nodes in the first intermediate layer, the output layer activity level calculator 9 calculates an activity level $A_{OUT}$ of each node in the output layer using the activity level $A'_{1M}$ of each node in the first intermediate layer.

A calculation method of the activity level $A_{OUT}$ of each node in the output layer used by the output layer activity level calculator 9 is similar to that of the above Embodiment 1.

As apparent from the above, according to the Embodiment 7, the first intermediate layer activity level calculator 43 refers to the index stored in the first intermediate layer storage 42, acquires, from among the activity levels of respective nodes in the second intermediate layer (context layer) calculated by the second intermediate layer activity level calculator 41 and weight for respective edges and bias values stored in the first intermediate layer storage 42, an activity level of each node in the second intermediate layer (context layer) that has connection with each node in the first intermediate layer and weight for each of edges and a bias value thereof, and calculates an activity level of each node in the first intermediate layer using the activity level of each node in the second intermediate layer (context layer) and the weight for each of the edges and the bias value having been acquired. This can achieve effects of reducing the calculation amount and the memory amount upon performing inference even in the case of employing a recurrent neural network (RNN) part of which forms a directed loop.

In other words, the first intermediate layer activity level calculator 43 is only required to perform calculation on each node in the second intermediate layer (context layer) that has connection with each node in the first intermediate layer and thus the calculation amount and the memory amount upon performing inference can be drastically reduced.

In the Embodiment 7, the example is described, in which the recurrent neural network (RNN) applied to the inference device is the Elman network. However, this is a mere example. Alternatively, for example, a Jordan network, a recurrent neural network having a long short term memory (LSTM) blocks, a hierarchical recurrent neural network, a bidirectional recurrent neural network, or a recurrent neural network of continuous time may be employed.

Note that, in the Embodiment 7, part of the layers holds indices for edge connections regardless of the types of the recurrent neural network.

(Embodiment 8)

In the Embodiments 1-7 described above, the neural network applied to the inference device is exemplified by a feed-forward neural network (FFNN) or a recurrent neural network (RNN), in which an edge connection between nodes belonging to the same layer is not included, or a self-connection where a connection source node equals a connection destination node is not included. Alternatively, a feed-forward neural network (FFNN) or a recurrent neural network (RNN) can be employed, in which the edge connection or the self-connection is included. Furthermore, a feed-forward neural network (FFNN) or a recurrent neural network (RNN) can be employed, in which a connection skipping a certain layer is included.

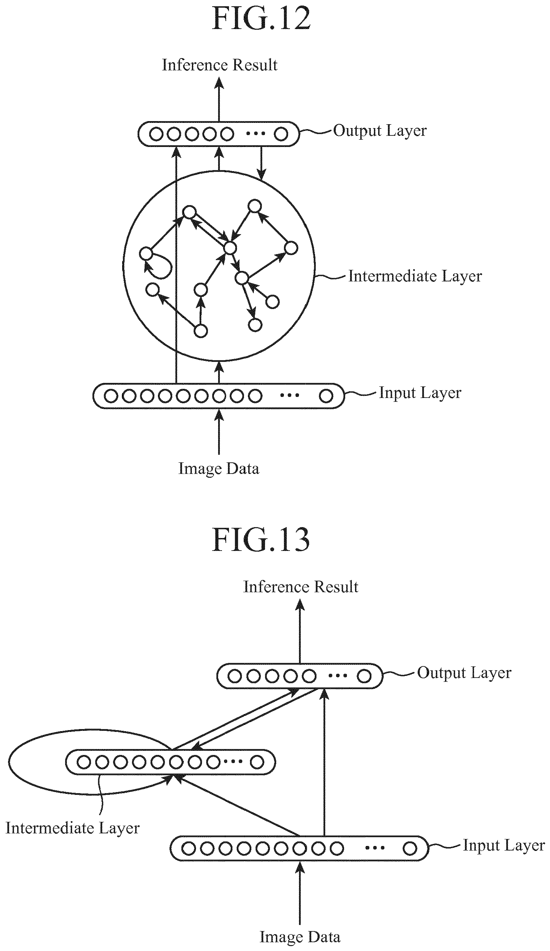

FIG. 12 is an explanatory diagram illustrating an exemplary echo state network being a neural network that includes edge connections among nodes within the intermediate layer or a self-connection and also includes an edge which connects an input layer to an output layer while skipping an intermediate layer.

In FIG. 12, the edge connection among the nodes within the intermediate layer or the self-connection can be regarded as an edge connection from the intermediate layer to this intermediate layer. Therefore, each layer of the echo state network can be represented by FIG. 13.

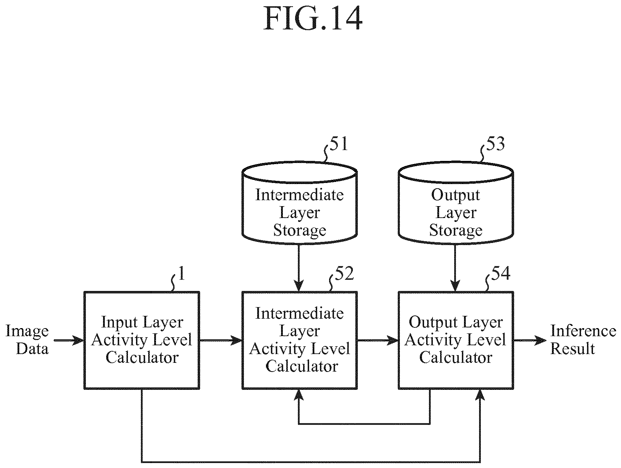

FIG. 14 is a diagram illustrating a configuration of an inference device according to an Embodiment 8 of the invention. In FIG. 14, the same symbol as that in FIG. 1 represents the same or a corresponding part and thus descriptions thereon are omitted.

An intermediate layer storage 51 is implemented by the intermediate layer storage device 12 that consists of a storing medium, such as a RAM or a hard disk. The intermediate layer storage 51 stores an index representing a relation of connection between each node in the intermediate layer and each node in the input layer or the output layer, weight for each of edges connecting a node in the intermediate layer and a node in the input layer or the output layer, and a bias value given to each node in the intermediate layer.

The intermediate layer storage 51 further stores an index representing relation of an edge connection among the nodes in the intermediate layer or a self-connection, weight for each of edges of the edge connection among the nodes in the intermediate layer or the self-connection, and a bias value given to each node in the intermediate layer.

A intermediate layer activity level calculator 52 is implemented by the intermediate layer activity level circuitry 13 constituted by a semiconductor integrated circuit or a one-chip microcomputer equipped with a CPU for example. The intermediate layer activity level calculator 52 refers to the index stored in the intermediate layer storage 51, similarly to the first intermediate layer activity level calculator 5 in FIG. 1, acquires, from among activity levels of the respective nodes in the input layer calculated by an input layer activity level calculator 1 or activity levels of the respective nodes in the output layer calculated by an output layer activity level calculator 54 and weight for respective edges and bias values stored in the intermediate layer storage 51, an activity level of each node in the input layer or the output layer that has connection with each node in the intermediate layer and weight for each of edges and a bias value thereof, and performs a process of calculating an activity level of each node in the intermediate layer by using the activity level of each node in the input layer or the output layer and the weight for each of the edges and the bias value having been acquired.

The intermediate layer activity level calculator 52 further refers to the index stored in the intermediate layer storage 51, acquires, from among activity levels of respective nodes in the intermediate layer having been calculated and weight for respective edges and bias values stored in the intermediate layer storage 51, an activity level of each node of a connection source in the intermediate layer that is connected with each node of a connection destination in the intermediate layer and weight for each of edges and a bias value thereof, and calculates an activity level of each node of a connection destination in the intermediate layer using the activity level of each node of a connection source in the intermediate layer and the weight for each of the edges and the bias value having been acquired.

Note that, a node of a connection destination in the intermediate layer means a node connected with another node in the intermediate layer or a node connected with itself in the intermediate layer.

A node of a connection destination in the intermediate layer means the other node connected with the node of the connection source in the intermediate layer or the node of self-connection in the intermediate layer.

An output layer storage 53 is implemented by the output layer storage device 14 that consists of a storing medium, such as a RAM or a hard disk. The output layer storage 53 stores an index representing a relation of connection (connection information) between each node in the output layer and each node in the input layer or the intermediate layer.

When a node in the output layer is connected with a node in the input layer, the output layer storage 53 further stores weight for each of edges connecting the node in the output layer and the node in the input layer and a bias value given to the node in the output layer connected with the node in the input layer.

When a node in the output layer is connected with a node in the intermediate layer, the output layer storage 53 further stores weight for each of edges connecting the node in the output layer and the node in the intermediate layer and a bias value given to the node in the output layer connected with the node in the intermediate layer.

The output layer activity level calculator 54 is implemented by the output layer activity level circuitry 15 constituted by a semiconductor integrated circuit or a one-chip microcomputer equipped with a CPU for example. When a node connected with a node in the output layer is in the input layer, the output layer activity level calculator 54 acquires, from among activity levels of the respective nodes in the input layer calculated by the input layer activity level calculator 1 and weight for respective edges and bias values stored in the output layer storage 53, an activity level of each node in the input layer having connection with each node in the output layer and weight for each of edges and a bias value thereof. When a node connected with a node in the output layer is in the intermediate layer, the output layer activity level calculator 54 acquires, from among activity levels of the respective nodes in the intermediate layer calculated by the intermediate layer activity level calculator 52 and weight for respective edges and bias values stored in the output layer storage 53, an activity level of each node in the intermediate layer having connection with each node in the output layer and weight for each of edges and a bias value thereof.

The output layer activity level calculator 54 further performs a process of calculating an activity level of each node in the output layer using the activity level of each node in the input layer or the intermediate layer and the weight for each of the edges and the bias value having been acquired.

In FIG. 14, it is assumed that each of the input layer activity level calculator 1, the intermediate layer storage 51, the intermediate layer activity level calculator 52, the output layer storage 53, and the output layer activity level calculator 54 that are components of the inference device is constituted by dedicated hardware. However, the inference device may be constituted by a computer.

When the inference device is constituted by a computer, it is only required that the intermediate layer storage 51 and the output layer storage 53 are constituted on the memory 21 of the computer illustrated in FIG. 3, that a program describing process contents of the input layer activity level calculator 1, the intermediate layer activity level calculator 52, and the output layer activity level calculator 54 is stored in the memory 21 of the computer illustrated in FIG. 3, and that the processor 22 of the computer executes the program stored in the memory 21.

Next, operations will be described.

After the input layer activity level calculator 1 calculates the activity level of each node in the input layer, similarly to the Embodiment 1 described above, the intermediate layer activity level calculator 52 refers to the index stored in the intermediate layer storage 51, confirms, from among the respective nodes in the intermediate layer, a node having connection with a node in the input layer and a node having connection with a node in the output layer.

With respect to a node in the intermediate layer, which has connection with a node in the input layer, an activity level is calculated by the intermediate layer activity level calculator 52 by using the activity level of each node in the input layer, similarly to the first intermediate layer activity level calculator 5 in FIG. 1.

With respect to a node in the intermediate layer, which has connection with a node in the output layer, an activity level is calculated by using the activity level of the output layer calculated by the output layer activity level calculator 54.

A calculation method of the activity level of the node having connection with a node in the output layer used by the intermediate layer activity level calculator 52 is similar to the calculation method of the activity level of a node having connection with a node in the input layer, except that a node having connection with a targeted node, for which the activity level is calculated, is not a node in the input layer but in the output layer.

After calculating the activity level of each node in the intermediate layer having connection with a node in the input layer or the output layer, the intermediate layer activity level calculator 52 refers to the index stored in the intermediate layer storage 51 and confirms, from among the respective nodes in the intermediate layer, a node of a connection source (a node connected with another node within the intermediate layer, or a node connected with itself in the intermediate layer) having connection with a node of a connection destination.

After confirming a node of a connection source having connection with a node of a connection destination, the intermediate layer activity level calculator 52 acquires, from among the activity levels of the respective nodes in the intermediate layer having been calculated and the weight for respective edges and the bias values stored in the intermediate layer storage 51, an activity level of each node of a connection source in the intermediate layer that has connection with a node of a connection destination in the intermediate layer and weight for each of edges and a bias value thereof.

When the node of a connection source in the intermediate layer has connection with a node in the input layer or in the output layer, an activity level of the connection source node is already calculated as described earlier. Therefore, it is possible to treat each node in the intermediate layer as a targeted node (a connection destination node), for which an activity level is calculated, in an order closer to a node in the intermediate layer having connection with a node in the input layer or in the output layer.

The intermediate layer activity level calculator 52 calculates an activity level of each node as a connection destination in the intermediate layer using the activity level of each node as a connection source in the intermediate layer and the weight for each of the edges and the bias value having been acquired.

A calculation method of the activity level of the node as a connection destination in the intermediate layer by the intermediate layer activity level calculator 52 is similar to the calculation method of the activity level of a node connected with a node in the input layer, except that a node of a connection source is not a node in the input layer but in the intermediate layer.

The output layer activity level calculator 54 refers to the index stored in the output layer storage 53, confirms each node in the input layer or the intermediate layer connected with each node in the output layer.

When a node connected with a node in the output layer is the one in the input layer, the output layer activity level calculator 54 acquires, from among the activity levels of the respective nodes in the input layer having been calculated by the input layer activity level calculator 1 and the weight for respective edges and the bias values stored in the output layer storage 53, an activity level of each node in the input layer connected with each node in the output layer and weight for each of edges and a bias value thereof. Meanwhile, when a node connected with a node in the output layer is the one in the intermediate layer, the output layer activity level calculator 54 acquires, from among the activity levels of the respective nodes in the intermediate layer having been calculated by the intermediate layer activity level calculator 52 and the weight for respective edges and the bias values stored in the output layer storage 53, an activity level of each node in the intermediate layer connected with each node in the output layer and weight for each of edges and a bias value thereof.

After acquiring the activity level of each node in the input layer or the intermediate layer and the weight for each of the edges and the bias value, the output layer activity level calculator 54 calculates an activity level of each node in the output layer by using the activity level of each node in the input layer or the intermediate layer and the weight for each of the edges and the bias value having been acquired.

As apparent from the above, according to the Embodiment 8, the intermediate layer activity level calculator 52 refers to the index stored in the intermediate layer storage 51, acquires, from among the activity levels of the respective nodes in the intermediate layer having been calculated and weight for respective edges and bias values stored in the intermediate layer storage 51, an activity level of each node as a connection source in the intermediate layer that is connected with a node as a connection destination in the intermediate layer and weight for each of edges and a bias value thereof, and calculates an activity level of each node as a connection destination in the intermediate layer using the activity level of each node as a connection source in the intermediate layer and the weight for each of the edges and the bias value having been acquired. This therefore achieves effects of reducing the calculation amount and the memory amount upon performing inference even in the case of employing a neural network in which edge connections among nodes in the intermediate layer or a self-connection is included.

According to the Embodiment 8, moreover, when a node connected with a node in the output layer is in the input layer, the output layer activity level calculator 54 acquires, from among the activity levels of the respective nodes in the input layer calculated by the input layer activity level calculator 1 and weight for respective edges and bias values stored in the output layer storage 53, an activity level of each node in the input layer that has connection with each node in the output layer and weight for each of edges and a bias value thereof and calculates an activity level of each node in the output layer using the activity level of each node in the input layer and the weight for each of the edges and the bias value having been acquired. This therefore achieves effects of reducing the calculation amount and the memory amount upon performing inference even in the case of employing a neural network in which an edge connecting the input layer and the output layer while skipping the intermediate layer is included.

In the Embodiment 8, the example is described, in which the neural network applied to the inference device is an echo state network. However, this is a mere example. Alternatively, a recurrent neural network with full-connection, a Hopfield network, or a Boltzmann machine may be employed.

Note that, in the Embodiment 8, part of the layers holds indices for edge connections regardless of which type of the neural network is employed.

(Embodiment 9)

The Embodiments 1 to 6 described above are exemplified by that the neural network applied to the inference device is a feed-forward neural network (FFNN), and the Embodiments 7 and 8 described above are exemplified by that the neural network applied to the inference device is a recurrent neural network (RNN). However, these are mere examples. Alternatively, the inference device may employ the following neural network. Note that, part of the layers holds indices for edge connections regardless of which type of the neural network is employed.

Examples of a neural network applied to an inference device include a radial basis function (RBF) network, a self-organizing MAP (SOM), a learning vector quantization (LVQ) method, a modular neural network, a spiking neural network, a dynamic neural network, a cascade neural network, or another type of neural network other than an FFNN or an RNN, such as that of a hierarchical temporal memory (HTM).

(Embodiment 10)

In the Embodiments 1 to 9 described above, an example is described, in which a learning method of the inference device is one from among supervised learning using an instruction signal corresponding to data, unsupervised learning using data without an instruction signal, and a semi-supervised learning. Alternatively, a learning method of the inference device may be reinforcement learning.

Reinforcement learning is a method of learning a model for an agent under a certain situation to observe a current state and to determine an action to be taken. The agent is intended as a function to perform appropriate operation by autonomously collecting information and determining situations without continuous operation by a user of a computer.

When the agent selects action, reward is obtained from the environment. In reinforcement learning, a policy is learned to be able to maximize reward through a series of actions.

In the reinforcement learning, a state-value function $V(s)$ representing the value of a state "s" or an action-value function $Q(s, a)$ representing reward obtained from the environment by selecting an action "a" in the state "s" is used as an index for measuring quality of a current state or action. As an algorithm of reinforcement learning, temporal difference (TD) learning, such as a SARSA or Q-learning, is used.

When a learning method of the inference device is reinforcement learning, a neural network that receives the state "s" and outputs a state-value function $V(s)$ or an action-value function $Q(s, a)$ is learned, and TD learning is performed by using those functions. That is, the state-value function $V(s)$ or the action-value function $Q(s, a)$ is calculated by using a neural network whose part of layers hold indices for edge connections, and thereby reinforcement learning is performed. Embodiments 9 and 10 are not according to the invention and are present for illustration purposes only.

Note that, within the scope of the present invention, the present invention may include a flexible combination of the respective embodiments, a modification

An inference device according to the present invention is suitable for those with high necessity of reducing the calculation amount or memory amount upon performing inference.

REFERENCE SIGNS LIST

1: input layer activity level calculator, 2: first intermediate layer storage (intermediate layer storage), 3: second intermediate layer storage (intermediate layer storage), 4: third intermediate layer storage (intermediate layer storage), 5: first intermediate layer activity level calculator (intermediate layer activity level calculator), 6: second intermediate layer activity level calculator (intermediate layer activity level calculator), 7: third intermediate layer activity level calculator (intermediate layer activity level calculator), 8: output layer storage, 9: output layer activity level calculator, 11: input layer activity level circuitry, 12: intermediate layer storage device, 13: intermediate layer activity level circuitry, 14: output layer storage device, 15: output layer activity level circuitry, 21: memory, 22: processor, 31: convolutional layer, 32: pooling layer, 33: convolutional layer, 34: pooling layer, 35: index-holding layer, 36: full connection layer, 41: second intermediate layer activity level calculator (intermediate layer activity level calculator), 42: first intermediate layer storage (intermediate layer storage), 43: first intermediate layer activity level calculator (intermediate layer activity level calculator), 51: intermediate layer storage, 52: intermediate layer activity level calculator, 53: output layer storage, 54: output layer activity level calculator

**Claims**

1.  An inference device configured to classify images, comprising:

    an input layer activity level calculator (1) to calculate (ST1), when image data is given to each node of an input layer constituting a neural network, an activity level of each node of the input layer from the given data; an intermediate layer storage (2) to store an index representing a relation of connection between each node in an intermediate layer constituting the neural network and each node in the input layer, weight applied to an edge that connects a node of the intermediate layer and a node of the input layer; an intermediate layer activity level calculator (5) to

    refer to the index stored in the intermediate layer storage, confirm each node in the input layer connected with a node in the intermediate layer, and confirm an edge connected with a node in the intermediate layer for each node of the intermediate layer, acquire, by referring to the index, from among the activity levels of the respective nodes of the input layer calculated by the input layer activity level calculator (1) and the weight for the respective edges stored in the intermediate layer storage (2), an activity level of each node in the input layer that has connection with a node in the intermediate layer and weight for a corresponding edge, so as to only perform calculation on nodes in the input layer that have a connection with a node in the intermediate layer, and calculate (ST2, ST3, ST4) an activity level of the node in the intermediate layer by using the acquired activity level of the node in the input layer and the acquired weight for the corresponding edge; and an output layer activity level calculator (9) to calculate (ST5) an activity level of each node in an output layer constituting the neural network by using the activity level of each node in the intermediate layer calculated by the intermediate layer activity level calculator (5), where the activity level of each node in the output layer is output as a value representing possibility of a type of an object in the image,

    wherein each node in the intermediate layer is connected with part of all nodes in the input layer, which are randomly selected from among the all nodes, and each node in the output layer is connected with part of all nodes in the intermediate layer, which are randomly selected from among the all nodes.

2.  An inference device configured to classify images, comprising:

    an input layer activity level calculator (1) to calculate (ST1), when image data is given to each node of an input layer constituting a neural network, an activity level of each node of the input layer from the given data; an intermediate layer storage (2) to store an index representing a relation of connection between each node in an intermediate layer constituting the neural network and each node in the input layer, weight applied to an edge that connects a node of the intermediate layer and a node of the input layer; an intermediate layer activity level calculator (5) to

    refer to the index stored in the intermediate layer storage, confirm each node in the input layer connected with a node in the intermediate layer, and confirm an edge connected with a node in the intermediate layer for each node of the intermediate layer, acquire, by referring to the index, from among the activity levels of the respective nodes of the input layer calculated by the input layer activity level calculator (1) and the weight for the respective edges stored in the intermediate layer storage (2), an activity level of each node in the input layer that has connection with a node in the intermediate layer and weight for a corresponding edge, so as to only perform calculation on nodes in the input layer that have a connection with a node in the intermediate layer, and calculate (ST2, ST3, ST4) an activity level of the node in the intermediate layer by using the acquired activity level of the node in the input layer and the acquired weight for the corresponding edge; and an output layer activity level calculator (9) to calculate (ST5) an activity level of each node in an output layer constituting the neural network by using the activity level of each node in the intermediate layer calculated by the intermediate layer activity level calculator (5), where the activity level of each node in the output layer is output as a value representing possibility of a type of an object in the image

wherein
each node in the intermediate layer is connected with part of all nodes in the input layer, which are not adjacent to each other, and
each node in the output layer is connected with part of all nodes in the intermediate layer, which are not adjacent to each other.

3. The inference device according to claim 1 or 2,
wherein the neural network is constituted to include a plurality of intermediate layers,
wherein, for each of the intermediate layers, the intermediate layer storage (2,3,4) stores weight for an edge that connects a node in the present intermediate layer and a node in the input layer when said connection of the nodes is found, and also stores weight for an edge that connects a node in the present intermediate layer and a node in another intermediate layer when said connection of the nodes is found,
when a node in the present intermediate layer is connected with a node in the input layer, the intermediate layer activity level calculator (5,6,7) acquires, from among the activity levels of the respective nodes in the input layer calculated by the input layer activity level calculator (1) and the weight for the respective edges stored in the intermediate layer storage (2,3,4), an activity level of the node in the input layer connected with the node in the present intermediate layer and weight for a corresponding edge,
when a node in the present intermediate layer is connected with a node in another intermediate layer, the intermediate layer activity level calculator (5,6,7) acquires, from among the activity levels of the respective nodes in said another intermediate layer and the weight for the respective edges stored in the intermediate layer storage (2,3,4), an activity level of the node in said another intermediate layer connected with the node in the present intermediate layer and weight for a corresponding edge, and
the intermediate layer activity level calculator (5,6,7) calculates an activity level of the node in the present intermediate layer by using the acquired activity level of the node in the input layer or said another intermediate layer and the acquired weight for the corresponding edge.

4. The inference device according to claim 1 or 2, further comprising an output layer storage (8) to store weight for an edge connecting a node in the output layer and a node in the intermediate layer,
wherein the output layer activity level calculator (9)

acquires, from among the activity levels of the respective nodes in the intermediate layer calculated by the intermediate layer activity level calculator (5,6,7) and the weight for the respective edges stored in the output layer storage (8), an activity level of a node in the intermediate layer connected with a node in the output layer and weight for a corresponding edge, and
calculates an activity level of the node in the output layer by using the acquired activity level of the node in the intermediate layer and the acquired weight for the corresponding edge.

5. The inference device according to claim 1 or 2, further comprising an output layer storage (8) to store weight for an edge that connects a node in the output layer and a node in the input layer when said connection of the nodes is found, and also store weight for an edge that connects a node in the output layer and a node in the intermediate layer when said connection of the nodes is found,
wherein, when a node in the output layer is connected with a node in the input layer, the output layer activity level calculator (9) acquires, from among the activity levels of the respective nodes in the input layer calculated by the input layer activity level calculator (1) and the weight for the respective edges stored in the output layer storage (8), an activity level of the node in the input layer that has connection with the node in the output layer and weight for a corresponding edge,
when a node in the output layer is connected with a node in the intermediate layer, the output layer activity level calculator (9) acquires, from among the activity levels of the respective nodes in the intermediate layer calculated by the intermediate layer activity level calculator (5,6,7) and the weight for the respective edges stored in the output layer storage (8), an activity level of the node in the intermediate layer that has connection with the node in the output layer and weight for a corresponding edge, and the output layer activity level calculator (9) calculates an activity level of the node in the output layer by using the acquired activity level of the node in the input layer or the intermediate layer and the acquired weight for the corresponding edge.

6. The inference device according to claim 1 or 2, wherein
the intermediate layer storage (2,3,4) stores a bias value given to each node in the intermediate layer in addition to the weight for the edge, and
the intermediate layer activity level calculator (5,6,7) calculates the activity level of the node in the intermediate layer by using the activity level of the node in the input layer and the weight for the edge and the bias value.

7. The inference device according to claim 6, wherein, for each node in the intermediate layer, the intermediate layer activity level calculator (5,6,7)
performs (ST13) product sum operation on between respective activity levels of respective nodes in the input layer connected with the present node in the intermediate layer and weight for respective edges connecting the present node in the intermediate layer and the respective nodes in the input layer,
adds (ST14) a bias value of the present node in the intermediate layer to a result of the product sum operation, and calculates (ST15), by using the addition result as an argument of an activation function of the neural network, a resulting value of the activation function as an activity level of the present node in the intermediate layer.

8. The inference device according to claim 4, wherein
the output layer storage (8) stores a bias value given to each node in the output layer in addition to the weight for the edge, and
the output layer activity level calculator (9) calculates the activity level of the node in the output layer by using the activity level of the node in the intermediate layer and the weight for the edge and the bias value.

9. The inference device according to claim 8, wherein, for each node in the output layer, the output layer activity level calculator (9)
performs (ST13) product sum operation on between respective activity levels of respective nodes in the intermediate layer connected with the present node in the output layer and weight for respective edges connecting the present node in the output layer and the respective nodes in the intermediate layer,
adds (ST14) a bias value of the present node in the output layer to a result of the product sum operation, and calculates (ST15), by using the addition result as an argument of an activation function of the neural network, a resulting value of the activation function as an activity level of the present node in the output layer.

10. The inference device according to claim 1 or 2, wherein the edges connecting the nodes in the input layer and the intermediate layer or the edges connecting the nodes in the intermediate layer and the output layer include six or more edges that form a loop.

11. The inference device according to claim 3, wherein the edges connecting the nodes in the plurality of intermediate layers include six or more edges that form a loop.

12. The inference device according to claim 1, wherein each node in the intermediate layer is connected with part of all nodes in the input layer or another intermediate layer, which are randomly selected from among the all nodes.

13. The inference device according to claim 2, wherein each node in the plurality of intermediate layers is connected with part of all nodes in the input layer or another intermediate layer, which are not adjacent to each other.

14. The inference device according to claim 1 or 2, wherein
an average number of connections per node in the intermediate layer with nodes in the input layer is fifty or less, and an average number of connections per node in the output layer with nodes in the intermediate layer is fifty or less.

15. The inference device according to claim 1 or 2, wherein an average number of connections per node in the plurality of intermediate layers with nodes in the input layer or another intermediate layer is fifty or less.

16. The inference device according to claim 1 or 2, wherein
an average number of connections per node in the intermediate layer with nodes in the input layer is one-tenth or less of the number of nodes in the input layer, and
an average number of connections per node in the output layer with nodes in the intermediate layer is one-tenth or less of the number of nodes in the intermediate layer.

17. The inference device according to claim 1 or 2, wherein an average number of connections per node in the plurality of intermediate layers with nodes in the input layer or another intermediate layer is one-tenth or less of the number of nodes in the input layer or said another intermediate layer.

**18.** A method for image classification comprising steps of:

storing, in an intermediate layer storage (2), an index representing a relation of connection between each node in an intermediate layer and each node in an input layer, weight applied to an edge that connects respective nodes of the intermediate layer and the input layer, each of which constitutes a neural network;

calculating (ST1), by an input layer activity level calculator (1) when image data is given to each node in the input layer, an activity level of each node in the input layer from the given data;

performing, by an intermediate layer activity level calculator (5), a process of

referring to the index stored in the intermediate layer storage, confirming each node in the input layer connected with a node in the intermediate layer, and confirming an edge connected with a node in the intermediate layer for each node of the intermediate layer,

acquiring, by referring to the index, from among the activity levels of the respective nodes in the input layer calculated by the input layer activity level calculator (1) and the weight for the respective edges stored in the intermediate layer storage (2), an activity level of each node in the input layer that has a connection with a node in the intermediate layer and weight for a corresponding edge, and

calculating (ST2, ST3, ST4) an activity level of the node in the intermediate layer by using the acquired activity level of the node in the input layer and the acquired weight for the corresponding edge, so as to only perform calculation on nodes in the input layer that have a connection with a node in the intermediate layer; and

calculating (ST5), by an output layer activity level calculator (9), an activity level of each node in an output layer constituting the neural network by using the activity level of each node in the intermediate layer calculated by the intermediate layer activity level calculator (5,6,7), where the activity level of each node in the output layer is output as a value representing possibility of a type of an object in the image,

wherein

each node in the intermediate layer is connected with part of all nodes in the input layer, which are randomly selected from among the all nodes, and

each node in the output layer is connected with part of all nodes in the intermediate layer, which are randomly selected from among the all nodes.

**19.** An inference method for image classification comprising steps of:

storing, in an intermediate layer storage (2), an index representing a relation of connection between each node in an intermediate layer and each node in an input layer, weight applied to an edge that connects respective nodes of the intermediate layer and the input layer, each of which constitutes a neural network:

calculating (ST1), by an input layer activity level calculator (1) when image data is given to each node in the input layer, an activity level of each node in the input layer from the given data:

performing, by an intermediate layer activity level calculator (5), a process of

referring to the index stored in the intermediate layer storage, confirming each node in the input layer connected with a node in the intermediate layer, and confirming an edge connected with a node in the intermediate layer for each node of the intermediate layer,

acquiring, by referring to the index, from among the activity levels of the respective nodes in the input layer calculated by the input layer activity level calculator (1) and the weight for the respective edges stored in the intermediate layer storage (2), an activity level of each node in the input layer that has a connection with a node in the intermediate layer and weight for a corresponding edge, and

calculating (ST2, ST3, ST4) an activity level of the node in the intermediate layer by using the acquired activity level of the node in the input layer and the acquired weight for the corresponding edge, so as to only perform calculation on nodes in the input layer that have a connection with a node in the intermediate layer: and

calculating (ST5), by an output layer activity level calculator (9), an activity level of each node in an output layer constituting the neural network by using the activity level of each node in the intermediate layer calculated by the intermediate layer activity level calculator (5,6,7), where the activity level of each node in the output layer is output as a value representing possibility of a type of an object in the image,

wherein

each node in the intermediate layer is connected with part of all nodes in the input layer, which are not adjacent to each other, and
each node in the output layer is connected with part of all nodes in the intermediate layer, which are not adjacent to each other.

**Patentansprüche**

1.  Inferenzeinrichtung, die zum Klassifizieren von Bildern eingerichtet ist, umfassend:

    einen Eingangsschicht-Aktivitätspegel-Berechner (1) zum Berechnen (ST1), wenn Bilddaten an jeden Knoten einer ein neuronales Netzwerk bildenden Eingangsschicht gegeben werden, eines Aktivitätspegels jedes Knotens der Eingangsschicht aus den gegebenen Daten;
    einen Zwischenschichtspeicher (2) zum Speichern eines Index, der eine Beziehung einer Verbindung zwischen jedem Knoten in einer Zwischenschicht, die das neuronale Netzwerk bildet, und jedem Knoten in der Eingangsschicht darstellt, wobei eine Gewichtung auf eine Kante angewendet wird, die einen Knoten der Zwischenschicht und einen Knoten der Eingangsschicht verbindet;
    einen Zwischenschicht-Aktivitätspegel-Berechner (5) zum

    Bezugnehmen auf den im Zwischenschichtspeicher gespeicherten Index, Bestätigen jedes Knotens in der Eingangsschicht, der mit einem Knoten in der Zwischenschicht verbunden ist, und Bestätigen einer Kante, die mit einem Knoten in der Zwischenschicht verbunden ist, für jeden Knoten der Zwischenschicht,
    Beschaffen, unter Bezugnahme auf den Index, aus den Aktivitätspegeln der jeweiligen Knoten der Eingangsschicht, die von dem Eingangsschicht-Aktivitätspegel-Berechner (1) berechnet werden, und der Gewichtung für die jeweiligen Kanten, die in dem Zwischenschichtspeicher (2) gespeichert sind, eines Aktivitätspegels jedes Knotens in der Eingangsschicht, der eine Verbindung mit einem Knoten in der Zwischenschicht aufweist, und einer Gewichtung für eine entsprechende Kante, um eine Berechnung nur an Knoten in der Eingangsschicht durchzuführen, die eine Verbindung mit einem Knoten in der Zwischenschicht aufweisen, und
    Berechnen (ST2, ST3, ST4) eines Aktivitätspegels des Knotens in der Zwischenschicht durch Verwenden des beschafften Aktivitätspegels des Knotens in der Eingangsschicht und der beschafften Gewichtung für die entsprechende Kante; und
    einen Ausgangsschicht-Aktivitätspegel-Berechner (9) zum Berechnen (ST5) eines Aktivitätspegels jedes Knotens in einer Ausgangsschicht, die das neuronale Netzwerk bildet, durch Verwenden des Aktivitätspegels jedes Knotens in der durch den Zwischenschicht-Aktivitätspegel-Berechner (5) berechneten Zwischenschicht, wo der Aktivitätspegel jedes Knotens in der Ausgangsschicht als ein Wert ausgegeben wird, der eine Möglichkeit eines Typs eines Objekts im Bild darstellt, wobei
    jeder Knoten in der Zwischenschicht mit einem Teil aller Knoten in der Eingangsschicht, die zufällig aus allen Knoten ausgewählt werden, verbunden ist, und
    jeder Knoten in der Ausgangsschicht mit einem Teil aller Knoten in der Zwischenschicht, die zufällig aus allen Knoten ausgewählt werden, verbunden ist.

2.  Inferenzeinrichtung, die zum Klassifizieren von Bildern eingerichtet ist, umfassend:

    einen Eingangsschicht-Aktivitätspegel-Berechner (1) zum Berechnen (ST1), wenn Bilddaten an jeden Knoten einer ein neuronales Netzwerk bildenden Eingangsschicht gegeben werden, eines Aktivitätspegels jedes Knotens der Eingangsschicht aus den gegebenen Daten;
    einen Zwischenschichtspeicher (2) zum Speichern eines Index, der eine Beziehung einer Verbindung zwischen jedem Knoten in einer Zwischenschicht, die das neuronale Netzwerk bildet, und jedem Knoten in der Eingangsschicht darstellt, wobei eine Gewichtung auf eine Kante angewendet wird, die einen Knoten der Zwischenschicht und einen Knoten der Eingangsschicht verbindet;
    einen Zwischenschicht-Aktivitätspegel-Berechner (5) zum

    Bezugnehmen auf den im Zwischenschichtspeicher gespeicherten Index, Bestätigen jedes Knotens in der Eingangsschicht, der mit einem Knoten in der Zwischenschicht verbunden ist, und Bestätigen einer Kante, die mit einem Knoten in der Zwischenschicht verbunden ist, für jeden Knoten der Zwischenschicht,
    Beschaffen, unter Bezugnahme auf den Index, aus den Aktivitätspegeln der jeweiligen Knoten der Eingangsschicht, die von dem Eingangsschicht-Aktivitätspegel-Berechner (1) berechnet werden, und der Gewichtung für die jeweiligen Kanten, die in dem Zwischenschichtspeicher (2) gespeichert sind, eines Aktivitätspegels jedes Knotens in der Eingangsschicht, der eine Verbindung mit einem Knoten in der Zwischenschicht aufweist, und einer Gewichtung für eine entsprechende Kante, um eine Berechnung nur an Knoten in der Eingangsschicht durchzuführen, die eine Verbindung mit einem Knoten in der Zwischenschicht aufweisen, und

Berechnen (ST2, ST3, ST4) eines Aktivitätspegels des Knotens in der Zwischenschicht durch Verwenden des beschafften Aktivitätspegels des Knotens in der Eingangsschicht und der beschafften Gewichtung für die entsprechende Kante; und

einen Ausgangsschicht-Aktivitätspegel-Berechner (9) zum Berechnen (ST5) eines Aktivitätspegels jedes Knotens in einer Ausgangsschicht, die das neuronale Netzwerk bildet, durch Verwenden des Aktivitätspegels jedes Knotens in der durch den Zwischenschicht-Aktivitätspegel-Berechner (5) berechneten Zwischenschicht, wo der Aktivitätspegel jedes Knotens in der Ausgangsschicht als ein Wert ausgegeben wird, der eine Möglichkeit eines Typs eines Objekts im Bild darstellt

wobei

jeder Knoten in der Zwischenschicht mit einem Teil aller Knoten in der Eingangsschicht, die nicht benachbart zueinander sind, verbunden ist, und

jeder Knoten in der Ausgangsschicht mit einem Teil aller Knoten in der Zwischenschicht, die nicht benachbart zueinander sind, verbunden ist.

3. Inferenzeinrichtung nach Anspruch 1 oder 2,

wobei das neuronale Netzwerk ausgebildet ist, eine Vielzahl von Zwischenschichten zu umfassen,

wobei für jede der Zwischenschichten der Zwischenschichtspeicher (2, 3, 4) eine Gewichtung für eine Kante speichert, die einen Knoten in der vorliegenden Zwischenschicht und einen Knoten in der Eingangsschicht verbindet, wenn die Verbindung der Knoten gefunden wird, und auch eine Gewichtung für eine Kante speichert, die einen Knoten in der vorliegenden Zwischenschicht und einen Knoten in einer anderen Zwischenschicht verbindet, wenn die Verbindung der Knoten gefunden wird,

wenn ein Knoten in der vorliegenden Zwischenschicht mit einem Knoten in der Eingangsschicht verbunden ist, der Zwischenschicht-Aktivitätspegel-Berechner (5, 6, 7) aus den Aktivitätspegeln der jeweiligen Knoten in der Eingangsschicht, die von dem Eingangsschicht-Aktivitätspegel-Berechner (1) berechnet werden, und der Gewichtung für die jeweiligen Kanten, die in dem Zwischenschichtspeicher (2, 3, 4) gespeichert sind, einen Aktivitätspegel des Knotens in der Eingangsschicht, die mit dem Knoten in der vorliegenden Zwischenschicht verbunden ist, und eine Gewichtung für eine entsprechende Kante beschafft,

wenn ein Knoten in der vorliegenden Zwischenschicht mit einem Knoten in einer anderen Zwischenschicht verbunden ist, der Zwischenschicht-Aktivitätspegel-Berechner (5, 6, 7) aus den Aktivitätspegeln der jeweiligen Knoten in der anderen Zwischenschicht und der Gewichtung für die jeweiligen Kanten, die in dem Zwischenschichtspeicher (2, 3, 4) gespeichert sind, einen Aktivitätspegel des Knotens in der anderen Zwischenschicht, die mit dem Knoten in der vorliegenden Zwischenschicht verbunden ist, und einer Gewichtung für eine entsprechende Kante beschafft, und

der Zwischenschicht-Aktivitätspegel-Berechner (5, 6, 7) einen Aktivitätspegel des Knotens in der vorliegenden Zwischenschicht durch Verwenden des beschafften Aktivitätspegels des Knotens in der Eingangsschicht oder der anderen Zwischenschicht und der beschafften Gewichtung für die entsprechende Kante berechnet.

4. Inferenzeinrichtung nach Anspruch 1 oder 2, ferner umfassend einen Ausgangsschichtspeicher (8) zum Speichern einer Gewichtung für eine Kante, die einen Knoten in der Ausgangsschicht und einen Knoten in der Zwischenschicht verbindet,

wobei der Ausgangsschicht-Aktivitätspegel-Berechner (9)

aus den Aktivitätspegeln der jeweiligen Knoten in der Zwischenschicht, die durch den Zwischenschicht-Aktivitätspegel-Berechner (5, 6, 7) berechnet werden, und der Gewichtung für die jeweiligen Kanten, die in dem Ausgangsschichtspeicher (8) gespeichert sind, einen Aktivitätspegel eines Knotens in der Zwischenschicht, der mit dem Knoten in der Ausgangsschicht verbunden ist, und einer Gewichtung für eine entsprechende Kante beschafft, und

einen Aktivitätspegel des Knotens in der Ausgangsschicht durch Verwenden des beschafften Aktivitätspegels des Knotens in der Zwischenschicht und der beschafften Gewichtung für die entsprechende Kante berechnet.

5. Inferenzeinrichtung nach Anspruch 1 oder 2, ferner umfassend einen Ausgangsschichtspeicher (8) zum Speichern einer Gewichtung für eine Kante, die einen Knoten in der Ausgangsschicht und einen Knoten in der Eingangsschicht verbindet, wenn die Verbindung der Knoten gefunden wird, und auch zum Speichern einer Gewichtung für eine Kante, die einen Knoten in der Ausgangsschicht und einen Knoten in der Zwischenschicht verbindet, wenn die Verbindung der Knoten gefunden wird,

wobei, wenn ein Knoten in der Ausgangsschicht mit einem Knoten in der Eingangsschicht verbunden ist, der Ausgangsschicht-Aktivitätspegel-Berechner (9) aus den Aktivitätspegeln der jeweiligen Knoten in der Eingangsschicht, die von dem Eingangsschicht-Aktivitätspegel-Berechner (1) berechnet werden, und der Gewichtung für die jeweiligen Kanten, die in dem Ausgangsschichtspeicher (8) gespeichert ist, einen Aktivitätspegel des Knotens in der Eingangsschicht, der eine Verbindung mit dem Knoten in der Ausgangsschicht aufweist, und eine Gewichtung für eine entsprechende Kante beschafft,
wenn ein Knoten in der Ausgangsschicht mit einem Knoten in der Zwischenschicht verbunden ist, der Ausgangsschicht-Aktivitätspegel-Berechner (9) aus den Aktivitätspegeln der jeweiligen Knoten in der Zwischenschicht, die von dem Zwischenschicht-Aktivitätspegel-Berechner (5, 6, 7) berechnet werden, und der Gewichtung für die jeweiligen Kanten, die in dem Ausgangsschichtspeicher (8) gespeichert ist, einen Aktivitätspegel des Knotens in der Zwischenschicht, der eine Verbindung mit dem Knoten in der Ausgangsschicht aufweist, und eine Gewichtung für eine entsprechende Kante beschafft, und der Ausgangsschicht-Aktivitätspegel-Berechner (9) einen Aktivitätspegel des Knotens in der Ausgangsschicht unter Verwendung des beschafften Aktivitätspegels des Knotens in der Eingangsschicht oder der Zwischenschicht und der beschafften Gewichtung für die entsprechende Kante berechnet.

6. Inferenzeinrichtung nach Anspruch 1 oder 2, wobei

der Zwischenschichtspeicher (2, 3, 4) einen Abweichungswert, der jedem Knoten in der Zwischenschicht zusätzlich zu der Gewichtung für die Kante gegeben ist, speichert, und
der Zwischenschicht-Aktivitätspegel-Berechner (5, 6, 7) den Aktivitätspegel des Knotens in der Zwischenschicht durch Verwenden des Aktivitätspegels des Knotens in der Eingangsschicht und der Gewichtung für die entsprechende Kante und des Abweichungswerts berechnet.

7. Inferenzeinrichtung nach Anspruch 6, wobei der Zwischenschicht-Aktivitätspegel-Berechner (5, 6, 7) für jeden Knoten in der Zwischenschicht

eine Produktsummenoperation zwischen entsprechenden Aktivitätspegeln entsprechender Knoten in der Eingangsschicht, die mit dem vorliegenden Knoten in der Zwischenschicht verbunden sind, und einer Gewichtung für entsprechende Kanten, die den vorliegenden Knoten in der Zwischenschicht und die jeweiligen Knoten in der Eingangsschicht verbinden, durchführt (ST13),
einen Abweichungswert des vorliegenden Knotens in der Zwischenschicht zu einem Ergebnis der Produktsummenoperation addiert (ST14), und
unter Verwendung des Additionsergebnisses als Argument einer Aktivierungsfunktion des neuronalen Netzwerks, einen resultierenden Wert der Aktivierungsfunktion als Aktivitätspegel des vorliegenden Knotens in der Zwischenschicht berechnet (ST15).

8. Inferenzeinrichtung nach Anspruch 4, wobei

der Ausgangsschichtspeicher (8) einen Abweichungswert, der jedem Knoten in der Ausgangsschicht zusätzlich zu der Gewichtung für die Kante gegeben ist, speichert, und
der Ausgangsschicht-Aktivitätspegel-Berechner (9) den Aktivitätspegel des Knotens in der Ausgangsschicht durch Verwenden des Aktivitätspegels des Knotens in der Zwischenschicht und der Gewichtung für die Kante und des Abweichungswerts berechnet.

9. Inferenzeinrichtung nach Anspruch 8, wobei der Ausgangsschicht-Aktivitätspegel-Berechner (9) für jeden Knoten in der Ausgangsschicht

eine Produktsummenoperation zwischen jeweiligen Aktivitätspegeln jeweiliger Knoten in der Zwischenschicht, die mit dem vorliegenden Knoten in der Ausgangsschicht verbunden sind, und einer Gewichtung für jeweilige Kanten, die den vorliegenden Knoten in der Ausgangsschicht und die jeweiligen Knoten in der Zwischenschicht verbinden, durchführt (ST13),
einen Abweichungswert des vorliegenden Knotens in der Ausgangsschicht zu einem Ergebnis der Produktsummenoperation addiert (ST14), und

unter Verwendung des Additionsergebnisses als Argument einer Aktivierungsfunktion des neuronalen Netzwerks, einen resultierenden Wert der Aktivierungsfunktion als Aktivitätspegel des aktuellen Knotens in der Ausgangsschicht berechnet (ST15).

10. Inferenzeinrichtung nach Anspruch 1 oder 2, wobei die Kanten, die die Knoten in der Eingangsschicht und der Zwischenschicht verbinden oder die Kanten, die die Knoten in der Zwischenschicht und der Ausgangsschicht verbinden, sechs oder mehr Kanten umfassen, die eine Schleife bilden.

11. Inferenzeinrichtung nach Anspruch 3, wobei die Kanten, die die Knoten in der Vielzahl von Zwischenschichten verbinden, sechs oder mehr Kanten umfassen, die eine Schleife bilden.

12. Inferenzeinrichtung nach Anspruch 1, wobei jeder Knoten in der Zwischenschicht mit einem Teil aller Knoten in der Eingangsschicht oder einer anderen Zwischenschicht, die zufällig aus allen Knoten ausgewählt werden, verbunden ist.

13. Inferenzeinrichtung nach Anspruch 2, wobei jeder Knoten in der Vielzahl von Zwischenschichten mit einem Teil aller Knoten in der Eingangsschicht oder einer anderen Zwischenschicht, die nicht benachbart zueinander sind, verbunden ist.

14. Inferenzeinrichtung nach Anspruch 1 oder 2, wobei

eine Durchschnittszahl von Verbindungen pro Knoten in der Zwischenschicht mit Knoten in der Eingangsschicht fünfzig oder weniger beträgt, und
eine Durchschnittszahl von Verbindungen pro Knoten in der Ausgangsschicht mit Knoten in der Zwischenschicht fünfzig oder weniger beträgt.

15. Inferenzeinrichtung nach Anspruch 1 oder 2, wobei eine Durchschnittszahl von Verbindungen pro Knoten in der Vielzahl von Zwischenschichten mit Knoten in der Eingangsschicht oder einer anderen Zwischenschicht fünfzig oder weniger beträgt.

16. Inferenzeinrichtung nach Anspruch 1 oder 2, wobei

eine Durchschnittszahl von Verbindungen pro Knoten in der Zwischenschicht mit Knoten in der Eingangsschicht ein Zehntel oder weniger der Anzahl von Knoten in der Eingangsschicht beträgt, und
eine Durchschnittszahl von Verbindungen pro Knoten in der Ausgangsschicht mit Knoten in der Zwischenschicht ein Zehntel oder weniger der Anzahl von Knoten in der Zwischenschicht beträgt.

17. Inferenzeinrichtung nach Anspruch 1 oder 2, wobei eine Durchschnittszahl von Verbindungen pro Knoten in der Vielzahl von Zwischenschichten mit Knoten in der Eingangsschicht oder einer anderen Zwischenschicht ein Zehntel oder weniger der Anzahl von Knoten in der Eingangsschicht oder der anderen Zwischenschicht beträgt.

18. Verfahren zur Bildklassifizierung, folgende Schritte umfassend:

Speichern, in einem Zwischenschichtspeicher (2), eines Index, der eine Beziehung einer Verbindung zwischen jedem Knoten in einer Zwischenschicht und jedem Knoten in einer Eingangsschicht darstellt, wobei eine Gewichtung auf eine Kante angewendet wird, die jeweilige Knoten der Zwischenschicht und der Eingabeschicht verbindet, von denen jede ein neuronales Netzwerk bildet;
Berechnen (ST1), durch einen Eingangsschicht-Aktivitätspegel-Berechner (1), wenn Bilddaten an jeden Knoten in der Eingangsschicht gegeben werden, eines Aktivitätspegels jedes Knotens in der Eingangsschicht aus den gegebenen Daten;
Durchführen, durch einen Zwischenschicht-Aktivitätspegel-Berechner (5) eines Prozesses des

Bezugnehmens auf den im Zwischenschichtspeicher gespeicherten Index, wobei jeder Knoten in der Eingangsschicht, der mit einem Knoten in der Zwischenschicht verbunden ist, bestätigt wird und wobei eine Kante, die mit einem Knoten in der Zwischenschicht für jeden Knoten der Zwischenschicht verbunden ist, bestätigt wird,
Beschaffens, unter Bezugnahme auf den Index, aus den Aktivitätspegeln der entsprechenden Knoten in der Eingangsschicht, die von dem Eingangsschicht-Aktivitätspegel-Berechner (1) berechnet werden, und der Gewichtung für die entsprechenden Kanten, die in dem Zwischenschichtspeicher (2) gespeichert sind, eines Aktivitätspegels jedes Knotens in der Eingangsschicht, der eine Verbindung mit einem Knoten in der Zwischenschicht aufweist, und einer Gewichtung für eine entsprechende Kante, und

Berechnens (ST2, ST3, ST4) eines Aktivitätspegels des Knotens in der Zwischenschicht durch Verwenden des beschafften Aktivitätspegels des Knotens in der Eingangsschicht und der beschafften Gewichtung für die entsprechende Kante, um nur Berechnung an Knoten in der Eingangsschicht durchzuführen, die eine Verbindung mit einem Knoten in der Zwischenschicht aufweisen; und

Berechnen (ST5), durch einen Ausgangsschicht-Aktivitätspegel-Berechner (9), eines Aktivitätspegels jedes Knotens in einer Ausgangsschicht, die das neuronale Netzwerk bildet, durch Verwenden des Aktivitätspegels jedes Knotens in der durch den Zwischenschicht-Aktivitätspegel-Berechner (5, 6, 7) berechneten Zwischenschicht, wo der Aktivitätspegel jedes Knotens in der Ausgangsschicht als ein Wert ausgegeben wird, der eine Möglichkeit eines Typs eines Objekts im Bild darstellt,
wobei
jeder Knoten in der Zwischenschicht mit einem Teil aller Knoten in der Eingangsschicht, die zufällig aus allen Knoten ausgewählt werden, verbunden ist, und
jeder Knoten in der Ausgangsschicht mit einem Teil aller Knoten in der Zwischenschicht, die zufällig aus allen Knoten ausgewählt werden, verbunden ist.

**19.** Inferenzverfahren zur Bildklassifizierung, folgende Schritte umfassend:

Speichern, in einem Zwischenschichtspeicher (2), eines Index, der eine Beziehung einer Verbindung zwischen jedem Knoten in einer Zwischenschicht und jedem Knoten in einer Eingangsschicht darstellt, wobei eine Gewichtung auf eine Kante angewendet wird, die entsprechende Knoten der Zwischenschicht und der Eingabeschicht verbindet, von denen jede ein neuronales Netzwerk bildet;
Berechnen (ST1), durch einen Eingangsschicht-Aktivitätspegel-Berechner (1), wenn Bilddaten an jeden Knoten in der Eingangsschicht gegeben werden, eines Aktivitätspegels jedes Knotens in der Eingangsschicht aus den gegebenen Daten;
Durchführen, durch einen Zwischenschicht-Aktivitätspegel-Berechner (5) eines Prozesses des

Bezugnehmens auf den im Zwischenschichtspeicher gespeicherten Index, wobei jeder Knoten in der Eingangsschicht, der mit einem Knoten in der Zwischenschicht verbunden ist, bestätigt wird und wobei eine Kante, die mit einem Knoten in der Zwischenschicht für jeden Knoten der Zwischenschicht verbunden ist, bestätigt wird,
Beschaffens, unter Bezugnahme auf den Index, aus den Aktivitätspegeln der jeweiligen Knoten in der Eingangsschicht, die von dem Eingangsschicht-Aktivitätspegel-Berechner (1) berechnet werden, und der Gewichtung für die jeweiligen Kanten, die in dem Zwischenschichtspeicher (2) gespeichert sind, eines Aktivitätspegels jedes Knotens in der Eingangsschicht, der eine Verbindung mit einem Knoten in der Zwischenschicht und eine Gewichtung für eine entsprechende Kante aufweist, und
Berechnens (ST2, ST3, ST4) eines Aktivitätspegels des Knotens in der Zwischenschicht durch Verwenden des beschafften Aktivitätspegels des Knotens in der Eingangsschicht und der beschafften Gewichtung für die entsprechende Kante, um nur Berechnung an Knoten in der Eingangsschicht durchzuführen, die eine Verbindung mit einem Knoten in der Zwischenschicht aufweisen; und

Berechnens (ST5), durch einen Ausgangsschicht-Aktivitätspegel-Berechner (9), eines Aktivitätspegels jedes Knoten in einer Ausgangsschicht, die das neuronale Netz bildet, durch Verwenden des Aktivitätspegels jedes Knoten in der durch den Zwischenschicht-Aktivitätspegel-Berechner (5, 6, 7) berechneten Zwischenschicht, wo der Aktivitätspegel jedes Knoten in der Ausgangsschicht als ein Wert ausgegeben wird, der eine Möglichkeit eines Typs eines Objekts im Bild darstellt,
wobei
jeder Knoten in der Zwischenschicht mit einem Teil aller Knoten in der Eingangsschicht, die nicht benachbart zueinander sind, verbunden ist, und
jeder Knoten in der Ausgangsschicht mit einem Teil aller Knoten in der Zwischenschicht, die nicht benachbart zueinander sind, verbunden ist.

**Revendications**

1.  Dispositif d'inférence configuré pour classer des images, comprenant :

    une unité de calcul de niveau d'activité de couche d'entrée (1) pour calculer (ST1), lorsque des données d'image sont données à chaque nœud d'une couche d'entrée constituant un réseau neural, un niveau d'activité de chaque nœud de la couche d'entrée à partir des données fournies ;
    une unité de mémorisation de couche intermédiaire (2) pour mémoriser un indice représentant une relation de connexion entre chaque nœud dans une couche intermédiaire constituant le réseau neural et chaque nœud dans la couche d'entrée, la valeur de pondération appliquée à un bord qui connecte un nœud de la couche intermédiaire et un nœud de la couche d'entrée ;
    une unité de calcul de niveau d'activité de couche intermédiaire (5) pour

    consulter l'indice mémorisé dans l'unité de mémorisation de couche intermédiaire, confirmer chaque nœud dans la couche d'entrée connecté à un nœud dans la couche intermédiaire, et confirmer un bord connecté à un nœud dans la couche intermédiaire pour chaque nœud de la couche intermédiaire,
    acquérir, en consultant l'indice, à partir des niveaux d'activités des nœuds respectifs de la couche d'entrée calculés par l'unité de calcul de niveau d'activité de couche d'entrée (1) et de la valeur de pondération pour les bords respectifs mémorisée dans l'unité de mémorisation de couche intermédiaire (2), un niveau d'activité de chaque nœud dans la couche d'entrée qui présente une connexion avec un nœud dans la couche intermédiaire et la valeur de pondération pour un bord correspondant, de façon à ne réaliser le calcul que sur les nœuds dans la couche d'entrée qui ont une connexion avec un nœud dans la couche intermédiaire, et calculer (ST2, ST3, ST4) un niveau d'activité du nœud dans la couche intermédiaire en utilisant le niveau d'activité acquis du nœud dans la couche d'entrée et la valeur de pondération acquise pour le bord correspondant ; et
    une unité de calcul de niveau d'activité de couche de sortie (9) pour calculer (ST5) un niveau d'activité de chaque nœud dans une couche de sortie constituant le réseau neural en utilisant le niveau d'activité de chaque nœud dans la couche intermédiaire calculée par l'unité de calcul de niveau d'activité de couche intermédiaire (5), où le niveau d'activité de chaque nœud dans la couche de sortie est sorti comme une valeur représentant la possibilité d'un type d'objet dans l'image, dans lequel
    chaque nœud dans la couche intermédiaire est connecté à une partie de l'ensemble des nœuds dans la couche d'entrée, qui sont sélectionnés aléatoirement parmi l'ensemble des nœuds, et
    chaque nœud dans la couche de sortie est connecté à une partie de l'ensemble des nœuds dans la couche intermédiaire, qui sont sélectionnés aléatoirement parmi l'ensemble des nœuds.

2.  Dispositif d'inférence configuré pour classer des images, comprenant :

    une unité de calcul de niveau d'activité de couche d'entrée (1) pour calculer (ST1), lorsque des données d'image sont données à chaque nœud d'une couche d'entrée constituant un réseau neural, un niveau d'activité de chaque nœud de la couche d'entrée à partir des données fournies ;
    une unité de mémorisation de couche intermédiaire (2) pour mémoriser un indice représentant une relation de connexion entre chaque nœud dans une couche intermédiaire constituant le réseau neural et chaque nœud dans la couche d'entrée, la valeur de pondération appliquée à un bord qui connecte un nœud de la couche intermédiaire et un nœud de la couche d'entrée ;
    une unité de calcul de niveau d'activité de couche intermédiaire (5) pour

    consulter l'indice mémorisé dans l'unité de mémorisation de couche intermédiaire, confirmer chaque nœud dans la couche d'entrée connecté à un nœud dans la couche intermédiaire, et confirmer un bord connecté à un nœud dans la couche intermédiaire pour chaque nœud de la couche intermédiaire,
    acquérir, en consultant l'indice, à partir des niveaux d'activité des nœuds respectifs de la couche d'entrée calculés par l'unité de calcul de niveau d'activité de couche d'entrée (1) et de la valeur de pondération pour les bords respectifs mémorisée dans l'unité de mémorisation de couche intermédiaire (2), un niveau d'activité de chaque nœud dans la couche d'entrée qui présente une connexion avec un nœud dans la couche intermédiaire et la valeur de pondération pour un bord correspondant, de façon à ne réaliser le calcul que sur les nœuds dans la couche d'entrée qui ont une connexion avec un nœud dans la couche intermédiaire, et calculer (ST2, ST3, ST4) un niveau d'activité du nœud dans la couche intermédiaire en utilisant le niveau d'activité acquis du nœud dans la couche d'entrée et la valeur de pondération acquise pour le bord correspondant ; et

une unité de calcul de niveau d'activité de couche de sortie (9) pour calculer (ST5) un niveau d'activité de chaque nœud dans une couche de sortie constituant le réseau neural en utilisant le niveau d'activité de chaque nœud dans la couche intermédiaire calculé par l'unité de calcul niveau d'activité de couche intermédiaire (5), où le niveau d'activité de chaque nœud dans la couche de sortie est sorti comme une valeur représentant la possibilité d'un type d'objet dans l'image

dans lequel
chaque nœud dans la couche intermédiaire est connecté à une partie de l'ensemble des nœuds dans la couche d'entrée, qui ne sont pas adjacents l'un à l'autre, et
chaque nœud dans la couche de sortie est connecté à une partie de l'ensemble des nœuds dans la couche intermédiaire, qui ne sont pas adjacents les uns aux autres.

3. Dispositif d'inférence selon la revendication 1 ou 2,

dans lequel le réseau neural est constitué pour comprendre une pluralité de couches intermédiaires,
dans lequel, pour chacune des couches intermédiaires, l'unité de mémorisation de couche intermédiaire (2, 3, 4) mémorise une valeur de pondération pour un bord qui connecte un nœud dans la présente couche intermédiaire et un nœud dans la couche d'entrée lorsque ladite connexion des nœuds est trouvée, et mémorise également une valeur de pondération pour bord qui connecte un nœud dans la présente couche intermédiaire et un nœud dans une autre couche intermédiaire lorsque ladite connexion des nœuds est trouvée,
lorsqu'un nœud dans la présente couche intermédiaire est connecté à un nœud dans la couche d'entrée, l'unité de calcul de niveau d'activité de couche intermédiaire (5, 6, 7) acquiert, à partir des niveaux d'activité des nœuds respectifs dans la couche d'entrée calculées par l'unité de calcul de niveau d'activité de couche d'entrée (1) et de la valeur de pondération pour les bords respectifs mémorisée dans l'unité de mémorisation de couche intermédiaire (2, 3, 4), un niveau d'activité du nœud dans la couche d'entrée connecté au nœud dans la présente couche intermédiaire et la valeur de pondération pour un bord correspondant,
lorsqu'un nœud dans la présente couche intermédiaire est connecté à un nœud dans une autre couche intermédiaire, l'unité de calcul de niveau d'activité de couche intermédiaire (5, 6, 7) acquiert, à partir des niveaux d'activité des nœuds respectifs dans ladite autre couche intermédiaire et de la valeur de pondération pour les bords respectifs mémorisée dans l'unité de mémorisation de couche intermédiaire (2, 3, 4), un niveau d'activité du nœud dans ladite autre couche intermédiaire connecté au nœud dans la présente couche intermédiaire et la valeur de pondération pour un bord correspondant, et
l'unité de calcul d'activité de couche intermédiaire (5, 6, 7) calcule un niveau d'activité du nœud dans la présente couche intermédiaire en utilisant le niveau d'activité acquis du nœud dans la couche d'entrée ou ladite autre couche intermédiaire et la valeur de pondération acquise pour le bord correspondant.

4. Dispositif d'inférence selon la revendication 1 ou 2, comprenant en outre une unité de mémorisation de couche de sortie (8) pour mémoriser la valeur de pondération pour un bord connectant un nœud dans la couche de sortie et un nœud dans la couche intermédiaire,
dans lequel l'unité de calcul de niveau d'activité de couche de sortie (9)

acquiert, à partir des niveaux d'activité des nœuds respectifs dans la couche intermédiaire calculées par l'unité de calcul de niveau d'activité de couche intermédiaire (5, 6, 7) et de la valeur de pondération pour les bords respectifs mémorisée dans l'unité de mémorisation de couche de sortie (8), un niveau d'activité d'un nœud dans la couche intermédiaire connecté à un nœud dans la couche de sortie et la valeur de pondération pour un bord correspondant, et
calcule un niveau d'activité du nœud dans la couche de sortie en utilisant le niveau d'activité acquis du nœud dans la couche intermédiaire et la valeur de pondération acquise pour le bord correspondant.

5. Dispositif d'inférence selon la revendication 1 ou 2, comprenant en outre une unité de mémorisation de couche de sortie (8) pour mémoriser la valeur de pondération pour un bord qui connecte un nœud dans la couche de sortie et un nœud dans la couche d'entrée lorsque ladite connexion des nœuds est trouvée, et mémorise également la valeur de pondération pour un bord qui connecte un nœud dans la couche de sortie et un nœud dans la couche intermédiaire lorsque ladite connexion des nœuds est trouvée,

dans lequel, lorsqu'un nœud dans la couche de sortie est connecté à un nœud dans la couche d'entrée, l'unité de calcul de niveau d'activité de couche de sortie (9) acquiert, à partir des niveaux d'activité des nœuds respectifs dans la couche d'entrée calculés par l'unité de calcul de niveau d'activité de couche d'entrée (1) et de la valeur de pondération pour les bords respectifs mémorisée dans l'unité de mémorisation de couche de sortie (8), un niveau d'activité du nœud dans la couche d'entrée qui a une connexion avec le nœud dans la couche de sortie et la valeur de pondération pour un bord correspondant,

lorsqu'un nœud dans la couche de sortie est connecté à un nœud dans la couche intermédiaire, l'unité de calcul de niveau d'activité de couche de sortie (9) acquiert, à partir des niveaux d'activité des nœuds respectifs dans la couche intermédiaire calculés par l'unité de calcul d'activité de couche intermédiaire (5, 6, 7) et de la valeur de pondération pour les bords respectifs mémorisée dans l'unité de mémorisation de couche de sortie (8), un niveau d'activité du nœud dans la couche intermédiaire qui a une connexion avec le nœud dans la couche de sortie et la valeur de pondération pour un bord correspondant, et l'unité de calcul de niveau d'activité de couche de sortie (9) calcule un niveau d'activité du nœud dans la couche de sortie en utilisant le niveau d'activité acquis du nœud dans la couche d'entrée ou la couche intermédiaire et la valeur de pondération acquise pour le bord correspondant.

6. Dispositif d'inférence selon la revendication 1 ou 2, dans lequel

l'unité de mémorisation de couche intermédiaire (2, 3, 4) mémorise une valeur de polarisation donnée à chaque nœud dans la couche intermédiaire en plus de la valeur de pondération pour le bord, et

l'unité de calcul de niveau d'activité de couche intermédiaire (5, 6, 7) calcule le niveau d'activité du nœud dans la couche intermédiaire en utilisant le niveau d'activité du nœud dans la couche d'entrée et la valeur de pondération pour le bord et la valeur de polarisation.

7. Dispositif d'inférence selon la revendication 6, dans lequel, pour chaque nœud dans la couche intermédiaire, l'unité de calcul de niveau d'activité de couche intermédiaire (5, 6, 7)

réalise (ST13) une opération de somme de produits entre les niveaux d'activité respectifs de nœuds respectifs dans la couche d'entrée connectés au présent nœud dans la couche intermédiaire et la valeur de pondération pour les bords respectifs connectant le présent nœud dans la couche intermédiaire et les nœuds respectifs dans la couche d'entrée,

ajoute (ST14) une valeur de polarisation du présent nœud dans la couche intermédiaire à un résultat de l'opération de somme de produits, et

calcule (ST15), en utilisant le résultat d'addition comme un argument d'une fonction d'activation du réseau neural, une valeur résultante de la fonction d'activation comme un niveau d'activité du présent nœud dans la couche intermédiaire.

8. Dispositif d'inférence selon la revendication 4, dans lequel

l'unité de mémorisation de couche de sortie (8) mémorise une valeur de polarisation donnée à chaque nœud dans la couche de sortie en plus de la valeur de pondération pour le bord, et

l'unité de calcul de niveau d'activité de couche de sortie (9) calcule le niveau d'activité du nœud dans la couche de sortie en utilisant le niveau d'activité du nœud dans la couche intermédiaire et la valeur de pondération pour le bord et la valeur de polarisation.

9. Dispositif d'inférence selon la revendication 8, dans lequel, pour chaque nœud dans la couche de sortie, l'unité de calcul de niveau d'activité de couche de sortie (9)

réalise (ST13) une opération de somme de produits entre le niveaux d'activité respectifs de nœuds respectifs dans la couche intermédiaire connectés au présent nœud dans la couche de sortie et la valeur de pondération pour les bords respectifs connectant le présent nœud dans la couche de sortie et les nœuds respectifs dans la couche intermédiaire,

ajoute (ST14) une valeur de polarisation du présent nœud dans la couche de sortie à un résultat de l'opération de somme de produits, et

calcule (ST15), en utilisant le résultat d'addition comme un argument d'une fonction d'activation du réseau neural, une valeur résultante de la fonction d'activation comme un niveau d'activité du présent nœud dans la couche de sortie.

10. Dispositif d'inférence selon la revendication 1 ou 2, dans lequel les bords connectant les nœuds dans la couche d'entrée et la couche intermédiaire ou les bords connectant les nœuds dans la couche intermédiaire et la couche de sortie comprennent six bords ou plus qui forment une boucle.

**11.** Dispositif d'inférence selon la revendication 3, dans lequel les bords connectant les nœuds dans la pluralité de couches intermédiaires comprennent six bords ou plus qui forment une boucle.

**12.** Dispositif d'inférence selon la revendication 1, dans lequel chaque nœud dans la couche intermédiaire est connecté à une partie de l'ensemble des nœuds dans la couche d'entrée ou une autre couche intermédiaire, qui sont sélectionnés aléatoirement parmi l'ensemble des nœuds.

**13.** Dispositif d'inférence selon la revendication 2, dans lequel chaque nœud dans la pluralité de couches intermédiaires est connecté à une partie de l'ensemble des nœuds dans la couche d'entrée ou une autre couche intermédiaire, qui ne sont pas adjacents les uns aux autres.

**14.** Dispositif d'inférence selon la revendication 1 ou 2, dans lequel

un nombre moyen de connexions par nœud dans la couche intermédiaire avec des nœuds dans la couche d'entrée est de cinquante ou moins, et
un nombre moyen de connexions par nœud dans la couche de sortie avec des nœuds dans la couche intermédiaire est de cinquante ou moins.

**15.** Dispositif d'inférence selon la revendication 1 ou 2, dans lequel un nombre moyen de connexions par nœud dans la pluralité de couches intermédiaires avec des nœuds dans la couche d'entrée ou une autre couche intermédiaire est de cinquante ou moins.

**16.** Dispositif d'inférence selon la revendication 1 ou 2, dans lequel

un nombre moyen de connexions par nœud dans la couche intermédiaire avec des nœuds dans la couche d'entrée est un dixième ou moins du nombre de nœuds dans la couche d'entrée, et
un nombre moyen de connexions par nœud dans la couche de sortie avec des nœuds dans la couche intermédiaire est un dixième ou moins du nombre de nœuds dans la couche intermédiaire.

**17.** Dispositif d'inférence selon la revendication 1 ou 2, dans lequel un nombre moyen de connexions par nœud dans la pluralité de couches intermédiaires avec des nœuds dans la couche d'entrée ou une autre couche intermédiaire est un dixième ou moins du nombre de nœuds dans la couche d'entrée ou ladite autre couche intermédiaire.

**18.** Procédé de classement d'images comprenant des étapes de :

mémorisation, dans une unité de mémorisation de couche intermédiaire (2), d'un indice représentant une relation de connexion entre chaque nœud dans une couche intermédiaire et chaque nœud dans une couche d'entrée, la valeur de pondération appliquée à un bord qui connecte des bords respectifs de la couche intermédiaire et de la couche d'entrée, dont chacune constitue un réseau neural ;
calcul (ST1), par une unité de calcul de niveau d'activité de couche d'entrée (1) lorsque des données d'image sont données à chaque nœud dans la couche d'entrée, d'un niveau d'activité de chaque nœud dans la couche d'entrée à partir des données fournies ;
réalisation, par une unité de calcul de niveau d'activité de couche intermédiaire (5), d'un processus de

consultation de l'indice mémorisé dans l'unité de mémorisation de couche intermédiaire, confirmation de chaque nœud dans la couche d'entrée connecté à un nœud dans la couche intermédiaire, et confirmation d'un bord connecté à un nœud dans la couche intermédiaire pour chaque nœud de la couche intermédiaire, acquisition, en consultant l'indice, à partir des niveaux d'activité des nœuds respectifs dans la couche d'entrée calculées par l'unité de calcul de niveau d'activité de couche d'entrée (1) et de la valeur de pondération pour les bords respectifs mémorisée dans l'unité de mémorisation de couche intermédiaire (2), d'un niveau d'activité de chaque nœud dans la couche d'entrée qui présente une connexion avec un nœud dans la couche intermédiaire et de la valeur de pondération pour un bord correspondant, et calcul (ST2, ST3, ST4) d'un niveau d'activité du nœud dans la couche intermédiaire en utilisant le niveau l'activité acquis du nœud dans la couche d'entrée et la valeur de pondération acquise pour le bord correspondant, de façon à ne réaliser le calcul que sur les nœuds dans la couche d'entrée qui ont une connexion avec un nœud dans la couche intermédiaire ; et

calcul (ST5), par une unité de calcul de niveau d'activité de couche de sortie (9), d'un niveau d'activité de chaque nœud dans une couche de sortie constituant le réseau neural en utilisant le niveau d'activité de chaque nœud dans la couche intermédiaire calculé par l'unité de calcul de niveau d'activité de couche intermédiaire (5, 6, 7), où le niveau d'activité de chaque nœud dans la couche de sortie est sorti comme une valeur représentant la possibilité d'un type d'objet dans l'image,

dans lequel

chaque nœud dans la couche intermédiaire est connecté à une partie de l'ensemble des nœuds dans la couche d'entrée, qui sont sélectionnés aléatoirement parmi l'ensemble des nœuds, et

chaque nœud dans la couche de sortie est connecté à une partie de l'ensemble des nœuds dans la couche intermédiaire, qui sont sélectionnés aléatoirement parmi l'ensemble des nœuds.

**19.** Procédé d'inférence pour le classement d'images comprenant des étapes de :

mémorisation, dans une unité de mémorisation de couche intermédiaire (2), d'un indice représentant une relation de connexion entre chaque nœud dans une couche intermédiaire et chaque nœud dans une couche d'entrée, la valeur de pondération appliquée à un bord qui connecte des bords respectifs de la couche intermédiaire et de la couche d'entrée, dont chacune constitue un réseau neural ;

calcul (ST1), par une unité de calcul de niveau d'activité de couche d'entrée (1) lorsque des données d'image sont données à chaque nœud dans la couche d'entrée, d'un niveau d'activité de chaque nœud dans la couche d'entrée à partir des données fournies ;

réalisation, par une unité de calcul de niveau d'activité de couche intermédiaire (5), d'un processus de

consultation de l'indice mémorisé dans l'unité de mémorisation de couche intermédiaire, confirmation de chaque nœud dans la couche d'entrée connecté à un nœud dans la couche intermédiaire, et confirmation d'un bord connecté à un nœud dans la couche intermédiaire pour chaque nœud de la couche intermédiaire, acquisition, en consultant l'indice, à partir des niveaux d'activité des nœuds respectifs dans la couche d'entrée calculées par l'unité de calcul de niveau d'activité de couche d'entrée (1) et de la valeur de pondération pour les bords respectifs mémorisée dans l'unité de mémorisation de couche intermédiaire (2), d'un niveau d'activité de chaque nœud dans la couche d'entrée qui présente une connexion avec un nœud dans la couche intermédiaire et de la valeur de pondération pour un bord correspondant, et

calcul (ST2, ST3, ST4) d'un niveau d'activité du nœud dans la couche intermédiaire en utilisant le niveau d'activité acquis du nœud dans la couche d'entrée et la valeur de pondération acquise pour le bord correspondant, de façon à ne réaliser le calcul que sur les nœuds dans la couche d'entrée qui ont une connexion avec un nœud dans la couche intermédiaire ; et

calcul (ST5), par une unité de calcul de niveau d'activité de couche de sortie (9), d'un niveau d'activité de chaque nœud dans une couche de sortie constituant le réseau neural en utilisant le niveau d'activité de chaque nœud dans la couche intermédiaire calculée par l'unité de calcul de niveau d'activité de couche intermédiaire (5, 6, 7), où le niveau d'activité de chaque nœud dans la couche de sortie est sortie comme une valeur représentant la possibilité d'un type d'objet dans l'image,

dans lequel

chaque nœud dans la couche intermédiaire est connecté à une partie de l'ensemble des nœuds dans la couche d'entrée, qui ne sont pas adjacents l'un à l'autre, et

chaque nœud dans la couche de sortie est connecté à une partie de l'ensemble des nœuds dans la couche intermédiaire, qui ne sont pas adjacents les uns aux autres.

EP 3 306 534 B1

# FIG.1

## FIG.2

## FIG.3

# FIG.4

```
            ┌──────────────┐
            │    START     │
            └──────┬───────┘
                   │
                   ▼
   ┌──────────────────────────────┐
   │   Calculate Activity Level of │ ⌐ST1
   │    Each Node of Input Layer   │
   └──────────────┬───────────────┘
                  │
                  ▼
   ┌──────────────────────────────┐
   │   Calculate Activity Level of │
   │         Each Node of          │ ⌐ST2
   │     First Intermediate Layer  │
   └──────────────┬───────────────┘
                  │
                  ▼
   ┌──────────────────────────────┐
   │   Calculate Activity Level of │
   │         Each Node of          │ ⌐ST3
   │    Second Intermediate Layer  │
   └──────────────┬───────────────┘
                  │
                  ▼
   ┌──────────────────────────────┐
   │   Calculate Activity Level of │
   │         Each Node of          │ ⌐ST4
   │     Third Intermediate Layer  │
   └──────────────┬───────────────┘
                  │
                  ▼
   ┌──────────────────────────────┐
   │   Calculate Activity Level of │ ⌐ST5
   │   Each Node of Output Layer   │
   └──────────────┬───────────────┘
                  │
                  ▼
            ┌──────────────┐
            │     END      │
            └──────────────┘
```

# FIG.5

```
           START

    ┌─────────────────────┐
    │   Read out Index     │───ST11
    └─────────────────────┘

    ┌─────────────────────┐
    │  Read out Parameter  │───ST12
    └─────────────────────┘

    ┌─────────────────────────┐
    │ Perform Product Sum Operation │───ST13
    └─────────────────────────┘

    ┌─────────────────────────┐
    │  Add Bias Value to Result of │───ST14
    │    Product Sum Operation     │
    └─────────────────────────┘

    ┌─────────────────────────┐
    │ Calculate Resulting Value of │───ST15
    │      Activation Function     │
    └─────────────────────────┘

            END
```

# FIG.6

# FIG.7

Index

| 0 | 3 | 5 |
|---|---|---|

| 1 | N-1 |
|---|-----|

| 4 |
|---|

| 2 | 5 |
|---|---|

Edge
Weight

| 0.2 | -0.5 | 0.1 |
|-----|------|-----|

| 0.8 | -0.3 |
|-----|------|

| 0.9 |
|-----|

| 1.3 | -0.7 |
|-----|------|

Bias Value

| 1.8 |
|-----|

| 3.2 |
|-----|

| 0.7 |
|-----|

| -0.8 |
|------|

( N ) (N+1) (N+2) ··· (N+M-1)     First Intermediate Layer

1.3

-0.5     0.9     -0.7

0.2     0.1

0.8     -0.3

( 0 ) ( 1 ) ( 2 ) ( 3 ) ( 4 ) ( 5 ) ··· (N-1)     Input Layer

FIG.8A

FIG.8B

FIG.8C

FIG.8D

# FIG.9

# FIG.10

# FIG.11

Image Data → Input Layer Activity Level Calculator (1) → First Intermediate Layer Activity Level Calculator (5) → Second Intermediate Layer Activity Level Calculator (41) → First Intermediate Layer Activity Level Calculator (43) → Output Layer Activity Level Calculator (9) → Inference Result

First Intermediate Layer Storage (2)
First Intermediate Layer Storage (42)
Output Layer Storage (8)

# FIG.12

Inference Result

Output Layer

Intermediate Layer

Input Layer

Image Data

# FIG.13

Inference Result

Output Layer

Intermediate Layer

Input Layer

Image Data

# FIG.14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0528399 A1

- JP 2011054200 A